(19) Europäisches Patentamt
European Patent Office
Office européen des brevets

(11) **EP 3 092 829 B1**

(12) **EUROPÄISCHE PATENTSCHRIFT**

(45) Veröffentlichungstag und Bekanntmachung des Hinweises auf die Patenterteilung:
**06.01.2021 Patentblatt 2021/01**

(51) Int Cl.:
***H04W 4/40*** *(2018.01)*        ***H04W 76/10*** *(2018.01)*

(21) Anmeldenummer: **14818895.6**

(22) Anmeldetag: **27.11.2014**

(86) Internationale Anmeldenummer:
**PCT/EP2014/075819**

(87) Internationale Veröffentlichungsnummer:
**WO 2015/104095 (16.07.2015 Gazette 2015/28)**

(54) **ZENTRALE KOMMUNIKATIONSEINHEIT EINES KRAFTFAHRZEUGES**

CENTRAL COMMUNICATION UNIT OF A MOTOR VEHICLE

UNITÉ DE COMMUNICATION CENTRALE D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2014 DE 102014200226**

(43) Veröffentlichungstag der Anmeldung:
**16.11.2016 Patentblatt 2016/46**

(73) Patentinhaber: **Bayerische Motoren Werke Aktiengesellschaft**
**80809 München (DE)**

(72) Erfinder:
• **LIM, Hyung-Taek**
  **81927 München (DE)**
• **LOTTERMANN, Christian**
  **80687 München (DE)**

(56) Entgegenhaltungen:
**WO-A1-2010/130737        GB-A- 2 475 110**
**US-A1- 2004 254 700**

**Beschreibung**

Die vorliegende Erfindung betrifft eine zentrale Kommunikationseinheit eines Kraftfahrzeuges. Insbesondere betrifft die vorliegende Erfindung eine zentrale Kommunikationseinheit eines Kraftfahrzeugs mit mehreren Verbindungsmodulen zur Herstellung einer drahtlosen Datenverbindung zwischen dem Kraftfahrzeug und zumindest einer außerhalb des Kraftfahrzeuges befindlichen Sende-/Empfangseinrichtung.

Bei herkömmlichen Kraftfahrzeugen wird die Kommunikation zwischen so genannten On-Board-Komponenten im Kraftfahrzeug mit Kommunikationspartnern außerhalb des Kraftfahrzeuges mittels einer Kommunikationseinheit TCB (Telematic Communication Box) realisiert. Mittlerweile gibt es in Kraftfahrzeugen eine Vielzahl von Geräten bzw. On-Board-Komponenten, die bei Benutzung eine Datenverbindung benötigen, wie zum Beispiel ein Internetradio, Navigationssystem mit Internetverbindung, Informationssysteme zum Laden von Nachrichten, etc., und Rettungssysteme, die bei einem Unfall selbstständig einen Notruf absetzen. Für eine jede On-Board-Komponente wird eine separate Kommunikationseinheit benötigt. Dies verursacht erhebliche Herstellungskosten und die Anzahl der Kommunikationseinheiten ist aufgrund des begrenzten Bauraumes in einem Kraftfahrzeug limitiert, so dass nicht beliebig viele Kommunikationseinheiten vorgesehen werden können und nicht beliebig viele On-Board-Komponenten mit einer Funkverbindung versehen werden können.

Deshalb wurde eine zentrale Kommunikationseinheit ATM (Advanced Telecommunication Module) entwickelt. Diese zentrale Kommunikationseinheit weist mehrere Verbindungsmodule auf, die jeweils eine Funkverbindung nach einem bestimmten Funkstandard herstellen können. Dies umfasst zum Beispiel zellulare Systeme (3G, 4G), wie auch lokale, funkbasierte Netzwerke (IEEE 802.11, IEEE 802.16). Dadurch kann die zentrale Kommunikationseinheit eine Funkverbindung mit unterschiedlichen Standards herstellen und gegebenenfalls sogar parallel mehrere Funkverbindungen auf unterschiedlichen Funkkanälen aufbauen. Mit dem zentralen Kommunikationsmodul kann somit eine Datenverbindung hergestellt und aufrecht erhalten werden, selbst wenn unterschiedliche Typen von Funknetzen an verschiedenen Positionen des Kraftfahrzeugs während einer Fahrt zur Verfügung stehen, wobei die Datenverbindung gleichzeitig oder aufeinanderfolgend über unterschiedliche Funkkanäle mit unterschiedlichen Funkstandards aufrechterhalten wird. Hierdurch kann automatisch der optimale Funkkanal zwischen dem Kraftfahrzeug und einem außerhalb des Kraftfahrzeugs befindlichen Kommunikationspartners ausgewählt werden. Das zentrale Kommunikationsmodul verteilt die vorhandene Datenrate der Funkverbindungen bzw. der Funkkanäle auf die einzelnen On-Board-Komponenten.

Bei einfachen zentralen Kommunikationseinheiten kann jeweils nur eine einzige, auf einer On-Board-Komponente ausgeführte Applikation bzw. Anwendung auf die Datenverbindung zwischen der zentralen Kommunikationseinheit und dem externen Kommunikationspartner zugreifen. Es gibt auch zentrale Kommunikationseinheiten, bei welchen mehrere Applikationen bzw. Anwendungen quasi-gleichzeitig über die zentrale Kommunikationseinheit kommunizieren können. Hierbei werden die Daten ohne Verwendung eines Priorisierungsmechanismus weitergeleitet, zum Beispiel nach dem FIFO-Prinzip (First-In-First-Out), wobei dieses auf Datenpakete, Nachrichten und/oder auf die gesamte Datenverbindung der jeweiligen Applikation angewendet wird.

Bei der herkömmlichen Lösung mit mehreren separaten Kommunikationseinheiten können alle On-Board-Komponenten, denen jeweils eine Kommunikationseinheit zugeordnet ist, separat eine Funkverbindung erhalten. Die Herstellungs- und Datenübertragungskosten für eine Vielzahl von Kommunikationseinheiten sind jedoch beträchtlich. Die Anzahl der Kommunikationseinheiten ist durch den begrenzten Bauraum limitiert. Zudem wird man die Vielzahl von Kommunikationseinheiten relativ einfach ausbilden, so dass eine jede Kommunikationseinheit mindestens eine Funkverbindung bzw. eine Verbindung über einen Funkkanal nach einem bestimmten Funkstandard (z.B. WLAN, GSM, 3G/UMTS, 4G/LTE) herstellen kann.

Bei der in Entwicklung befindlichen Lösung mittels einer zentralen Kommunikationseinheit hat man den Vorteil, dass die Funkverbindung automatisch auf das beste und/oder günstigste zur Verfügung stehende Funknetz geschaltet wird, so dass eine optimale Datenverbindung besteht. Wollen jedoch mehrere Applikationen gleichzeitig eine Datenverbindung benutzen, dann besteht das Problem, dass sich die einzelnen Applikationen gegenseitig blockieren können. Insbesondere Applikationen, die eine große Datenmenge übertragen wollen, können Applikationen, die lediglich eine kleine Datenmenge übertragen wollen, so stark beeinträchtigen, dass die Applikationen mit geringer Datenmenge praktisch nicht funktionieren. Dies ist insbesondere kritisch, wenn die Applikationen mit kleiner Datenmenge für den Fahrzeuglenker wichtige Applikationen sind, wie zum Beispiel die Übermittlung von Verkehrsnachrichten oder die Absetzung eines Notrufes. Wenn diese durch das Herunterladen von Musik oder eines Films beeinträchtigt werden, dann ist das für den Fahrzeuglenker erheblich von Nachteil.

Aus der WO 2010/130737 A1 geht eine Antenneneinrichtung für die Fahrzeugkommunikation hervor, welche mindestens eine Antenne für eine zelluläre Funkkommunikation, für eine bidirektionale Adhoc-Netzwerk-Funkkommunikation und/oder für eine Satelliten-Funkkommunikation sowie Treiberelemente zum Senden und/oder Empfangen von Daten mittels zellulärer Funkkommunikation, mittels bidirektionaler Adhoc-Netzwerk-Funkkommunikation oder mittels Satelliten-Funkkommunikation aufweist. Die Antenneneinheit ist mit einer Recheneinheit verbunden, in welcher eine Mobilfunkeinheit integriert ist. Die Mobilfunkeinheit dient zur Einwahl und dem Netzzugang in ein öffentliches Mobilfunknetz. Die Mobilfunkeinheit ist mit einer Notrufeinheit verbunden, welche im Falle eines Unfalls, z. B. ausgelöst durch ein Airbag-Auslösesignal oder eine manuelle Auslösung, einen automatischen Notruf aussendet.

Die EP 2 133 849 A1 beschreibt ein Kommunikationssystem zwischen Kraftfahrzeugen, welche auch als Inter-Car-Kommunikation oder Car-2-Car-Kommunikation bezeichnet wird. Ein jedes Kraftfahrzeug, das an der Inter-Car-Kommunikation teilnehmen kann, weist hierzu eine Zwischen-Fahrzeug-Kommunikationseinrichtung auf, welche zwischen einer Sende- und Empfangseinrichtung und Anwendungen geschaltet ist, welche netzwerkbezogen oder nicht-netzwerkbezogen ausgebildet sein können. Die Inter-Car-Kommunikation wird vorzugsweise im Broadcasting-Modus ausgeführt. Es kann jedoch auch eine spezifische Verbindung zwischen zwei Kraftfahrzeugen aufgebaut werden. Um einen Nachrichtenstau (congestion) zu vermeiden, wird zunächst die Priorität einer jeden Anwendung der nicht-netzwerkbezogenen Anwendungen, die Priorität des Fahrzeugs einschließlich des Gefahrengrades, des erforderlichen Abstands und der zulässigen Verzögerungszeit und die Kanalauslastungsrate erfasst. Danach wird an einem jeden Fahrzeug die Gefahr eines Nachrichtenstaus anhand der eigenen Stauinformationen als auch anhand der Nachrichtenstauinformationen anderer Fahrzeuge abgeschätzt, um einen Nachrichtenstau zwischen den einzelnen Fahrzeugen zu vermeiden. Zur Vermeidung eines solchen Nachrichtenstaus kann die Übertragungsleistung erhöht werden, das Übertragungsintervall und der Übertragungskanal geändert werden.

Der Erfindung liegt deshalb die Aufgabe zugrunde, eine zentrale Kommunikationseinheit eines Kraftfahrzeuges derart zu erweitern, dass mehrere Applikationen gleichzeitig über einen oder mehrere Funkkanäle mit externen Kommunikationspartnern effizient und sicher kommunizieren können. Die Aufgabe wird durch die unabhängigen Patentansprüche gelöst. Vorteilhafte Ausgestaltungen sind in den jeweiligen Unteransprüchen angegeben.

Eine erfindungsgemäße zentrale Kommunikationseinheit eines Kraftfahrzeuges umfasst

mehrere Verbindungsmodule zur Herstellung einer drahtlosen Datenverbindung zwischen dem Kraftfahrzeug und zumindest einer außerhalb des Kraftfahrzeuges befindlichen Sende-/Empfangseinrichtung,

einen Verbindungsmodulmanager zur Steuerung der Verbindungsmodule, um eine geeignete Datenverbindung zwischen dem Kraftfahrzeug und der zumindest einen Sende-/Empfangseinrichtung bereitzustellen,

ein Datennetzwerk, um mehrere Geräte innerhalb des Kraftfahrzeuges zu verbinden, wobei mehrere auf den Geräten ausführbare Applikationen jeweils eine Datenverbindung über die zentrale Kommunikationseinheit zur Sende-/Empfangseinrichtung beanspruchen können.

Die zentrale Kommunikationseinheit zeichnet sich durch ein Kommunikationsorganisationsmodul aus, das derart ausgebildet ist, dass die zur Verfügung stehenden externen Verbindungskapazitäten zwischen der zentralen Kommunikationseinheit und der zumindest einen Sende-/Empfangseinrichtung aktiv nach vorbestimmten Kriterien auf die einzelnen aktiven Datenverbindungen der Applikationen verteilt werden.

Die zur Verfügung stehenden externen Verbindungskapazitäten sind die Verbindungskapazitäten der einzelnen Funkkanäle, wobei sich die Verbindungskapazität eines Funkkanals grundsätzlich aus der Bandbreite bzw. der Datenrate des Funkkanals ergibt. Weitere Parameter, wie z.B. die Fehlerrate oder die Latenz, können bei der Bestimmung der Verbindungskapazität des jeweiligen Funkkanals einfließen.

Ein Funkkanal ist eine Funkverbindung eines oder mehrerer Kraftfahrzeuge über eine bestimmte Frequenz eines Funksystems mit einer außerhalb der Kraftfahrzeuge befindlichen Sende-/Empfangseinrichtung, d.h. dass sich die Verbindungskapazität des Funkkanals auf die mehreren Kraftfahrzeuge aufteilt. Die Aufteilung erfolgt nach dem Zeitmultiplexverfahren.

Die Verteilung der externen Verbindungskapazitäten kann auch durch Zuweisen von bestimmten Funkkanälen an bestimmte Datenverbindungen (Frequenzmultiplex) erfolgen.

Es ist auch möglich die Aufteilung der externen Verbindungskapazitäten mit einem kombinierten Zeit- und Frequenzmultiplexverfahren durchzuführen.

Durch das Vorsehen des Kommunikationsorganisationsmoduls ist es möglich, dass zwei oder mehrere Applikationen gleichzeitig jeweils eine Datenverbindung über die zentrale Kommunikationseinheit benutzen, wobei das Kommunikationsorganisationsmodul nach den vorbestimmten Kriterien, insbesondere ihrem Bedarf an Verbindungskapazität und/oder einer Priorität der Datenverbindungen, die Verbindungskapazitäten verteilt bzw. zuweist.

Bei einer bevorzugten Ausführungsform weist die zentrale Kommunikationseinheit ein Verbindungsregister auf, in dem die Datenverbindungen mit ihren aktuellen Eigenschaften bzw. Parametern registriert sind.

Im Verbindungsregister sind neben einem Identifikationsbezeichner für die Datenverbindung insbesondere eine oder mehrere der folgenden Parameter der Datenverbindung bzw. des Funkkanals gespeichert:

- Zuordnung eines Funkkanals zu der jeweiligen Datenverbindung, d.h. Eintrag eines Identifikationsbezeichners für den Funkkanal;

- der Datenverbindung zugeordnete Bandbreite bzw. Datenrate des Funkkanals, d.h. der Betrag an Datenrate, den die Datenverbindung von der gesamten Datenrate des jeweiligen Funkkanals belegt;

- aktuelle Bandbreite bzw. Datenrate des Funkkanals;

- aktuelle Fehlerrate des Funkkanals;

- aktuelle Latenz des Funkkanals;

- Datenübertragungskosten des Funkkanals.

Mit Hilfe des Verbindungsregisters wird bzw. werden einer Datenverbindung durch das Kommunikationsorganisationsmodul ein oder mehrere Funkkanäle zugeordnet, d.h. einer logischen Verbindung wird eine bzw. werden mehrere physikalische Verbindungen zugewiesen.

Im Verbindungsregister können dieselben Funkkanäle unterschiedlichen Datenverbindungen zugeordnet sein.

Durch das Vorsehen des Verbindungsregisters in der zentralen Kommunikationseinheit sind die einzelnen Datenverbindungen im Kommunikationsorganisationsmodul bekannt, so dass die einzelnen Datenverbindungen durch das Kommunikationsorganisationsmodul gezielt überwacht werden können, damit dieses auf Änderungen der Verbindungskapazitäten der Funkkanäle während der Datenübertragung reagieren kann.

Die Informationen über die Verbindungskapazitäten werden über den Verbindungsmodulmanager bereitgestellt, wobei dieser die entsprechenden Informationen (Bandbreite bzw. Datenrate, Fehlerrate, Latenz, Datenübertragungskosten) des jeweiligen Funkkanals im Verbindungsregister periodisch aktualisiert.

Vorzugsweise weist die zentrale Kommunikationseinheit ein Applikationsprofilregister auf, in dem die Anforderungen bzw. Parameter der Applikationen eingetragen sind und welches neben einem Identifikationsbezeichner für die Applikation einen oder mehrere der folgenden Parameter umfasst:

- Zuordnung einer Datenverbindung zu der jeweiligen Applikation;

- Aktuelle Bandbreite bzw. Datenrate, die der Applikation zur Verfügung steht bzw. ihr gewährt wird;

- Applikationsklasse, wobei die Applikationen in mehrere Klassen, wie zum Beispiel Notruf (Klasse 1), Verkehrsnachrichten (Klasse 2), Telefonieren VoIP und Streaming (Klasse 3), und ftp-Anwendungen und Web-Seiten (Klasse 4) unterteilt sind;

- Priorität für eine Datenverbindung über einen bestimmten Funkkanal;

- Minimale Datenrate, mit der die Applikation über eine Datenverbindung überträgt;

- Maximale Datenrate, mit der die Applikation über eine Datenverbindung überträgt;

- Maximale Fehlerrate der Datenverbindung;

- Maximale Latenz der Datenverbindung.

Durch das Vorsehen des Applikationsprofilregisters in der zentralen Kommunikationseinheit sind die einzelnen Applikationen, die Daten über jeweils eine Datenverbindung übertragen, im Kommunikationsorganisationsmodul bekannt, so dass die Datenübertragungen der einzelnen Applikationen von dem Kommunikationsorganisationsmodul gezielt überwacht werden können.

Mit Hilfe eines Abgleichs der im Applikationsprofilregister hinterlegten Parameter mit den Parametern des Verbindungsregisters kann das Kommunikationsorganisationsmodul vor bzw. während einer Datenübertragung ermitteln, ob die zur Verfügung stehende Verbindungskapazität der Datenverbindung für die Anforderungen der jeweiligen Applikation ausreichend ist und während einer Datenübertragung entscheiden, ob und wie es auf geänderte Verbindungskapazitäten reagiert.

In Kraftfahrzeugen wird zwischen zwei verschiedenen Applikationsarten, statischen Applikationen, die ihre Bandbreiteanforderungen nicht anpassen können, und dynamischen Applikationen, die ihre Bandbreiteanforderungen anpassen können, unterschieden. Damit das Kommunikationsorganisationsmodul erkennen kann, welche Applikationsart (statisch oder dynamisch) einer Applikation vorliegt, weist das Applikationsprofilregister vorzugsweise einen Eintrag zur minimalen Datenrate und einen Eintrag zur maximalen Datenrate, mit denen eine Applikation überträgt, auf. Eine statische Applikation übermittelt bei einer Anfrage für eine Datenverbindung für beide Einträge denselben Wert oder alternativ einen einzigen Wert, der in beide Einträge eingetragen wird, während eine dynamische Applikation zwei unterschiedliche Werte übermittelt, die die minimale und die maximale Datenrate der Applikation repräsentieren und die entsprechend eingetragen werden. Mit Hilfe dieser Einträge kann das Kommunikationsorganisationsmodul somit zwischen dynamischen Applikationen und statischen Applikationen unterscheiden. Durch diese Unterscheidung kann das Kommunikationsorganisationsmodul seine Reaktion auf eine Änderung der Verbindungskapazitäten an die entsprechenden Möglichkeiten der jeweiligen Applikation anpassen.

Mit dem Kommunikationsorganisationsmodul kann die Dienstgüte (Quality-of-Service) der Datenverbindungen der einzelnen dynamischen Applikationen überwacht und falls erforderlich, aktiv eingegriffen werden, indem einer bestimmten Datenverbindung bzw. einer dynamischen Applikation mehr und einer oder mehreren anderen Datenverbindungen bzw. dynamischen Applikationen weniger Verbindungskapazität zugeordnet wird.

Das Kommunikationsorganisationsmodul kann in die Übertragungsart der Datenverbindung eingreifen und der jeweiligen dynamischen Applikation die maximal erreichbare bzw. zur Verfügung stehende Verbindungskapazität einer oder mehrerer der Datenverbindungen mitteilen und die dynamische Applikation kann auf dieser Information basierend die Applikationsmodi anpassen. Zum Beispiel kann eine dynamische Applikation die Auflösung oder den Codec beim Übertragen von Videostreams bzw. Videodateien ändern, um die benötigte Verbindungskapazität in Übereinstimmung mit der zur Verfügung stehenden Verbindungskapazität zu bringen.

Eine dynamische Applikation kann durch das Kommunikationsorganisationsmodul zu einer Erhöhung oder zu einer Reduzierung der Datenkapazität aufgefordert werden, bis hin zu einer vollständigen Aufhebung einer bestimmten Datenverbindung.

Das Kommunikationsorganisationsmodul kann eine bestimmte Datenverbindung einer dynamischen oder statischen Applikation vollständig aufheben und/oder den entsprechenden Applikationen eine Anforderung senden, die Kommunikation zu beenden, so dass diese ihre jeweilige Datenverbindung aufgeben. Letzteres kann durch eine Nachricht der entsprechenden Applikation an das Kommunikationsorganisationsmodul bestätigt werden.

Die durch eine Aufhebung oder durch das Beenden der Kommunikation frei werdende Verbindungskapazität kann durch das Kommunikationsorganisationsmodul einer oder mehreren anderen Datenverbindungen bzw. Applikationen zugeordnet werden.

Beide genannten Register können alternativ in einem Register innerhalb der zentralen Kommunikationseinheit zusammengeführt sein.

Da zwischen den Funkkanälen und den Datenverbindungen eine m:n-Beziehung besteht, kann die Zuordnung zwischen beiden auch durch ein weiteres Register, z.B. durch ein Zuordnungsregister, geschehen.

Die mehreren Verbindungsmodule sind zur Herstellung von Funkverbindungen bzw. Verbindungen über Funkkanäle in Funksystemen nach unterschiedlichen Standards ausgebildet. Diese Standards sind insbesondere WLAN, GSM, GPRS, EDGE, 3G/UMTS, HSPA, 4G/LTE, ETSI ITS-G5. Mit den Verbindungsmodulen können gleichzeitig oder aufeinanderfolgend Funkverbindungen mit unterschiedlichen Standards betrieben werden. Die Funkverbindungen werden nach vorbestimmten Kriterien gesteuert, welche insbesondere die Verfügbarkeit der Funkkanäle, die Bandbreite, die verfügbare Datenrate, die Kosten, die Latenz und die Fehlerrate sind. Befindet sich das Kraftfahrzeug in einem öffentlichen WLAN-Netzwerk ohne Zugangsbeschränkung mit hoher Bandbreite, dann wird bevorzugt dieses WLAN-Netzwerk verwendet. Da derartige WLAN-Netzwerke örtlich beschränkt sind, wird nach dem Verlassen dieses Netzwerkes auf einen anderen Funkkanal automatisch umgeschaltet, der auch nach dem gleichen oder einem anderen Standard ausgebildet sein kann. Dies wird vom Verbindungsmodulmanager automatisch gesteuert, so dass jederzeit die optimale Funkverbindung zwischen Kraftfahrzeug und externen Kommunikationspartnern besteht.

Bei einem erfindungsgemäßen Verfahren zum Steuern der Kommunikation zwischen mehreren Applikationen, welche auf mit einem Datennetzwerk verbundenen Geräten eines Kraftfahrzeuges ausgeführt werden, mit zumindest einer außerhalb des Kraftfahrzeuges befindlichen Sende-/Empfangseinrichtung mittels einer zentralen Kommunikationseinheit, können die mehreren Applikationen jeweils über eine Datenverbindung über die zentrale Kommunikationseinheit mit der Sende-/Empfangseinrichtung kommunizieren, und eine zur Verfügung stehende externe Verbindungskapazität zwischen der zentralen Kommunikationseinheit und der zumindest einen Sende-/Empfangseinrichtung wird mittels einem Kommunikationsorganisationsmodul aktiv nach vorbestimmten Kriterien auf die einzelnen aktiven Datenverbindungen der Applikationen verteilt.

Vorzugsweise überwacht das Kommunikationsorganisationsmodul den Datenfluss der einzelnen Datenverbindungen von und zu den einzelnen Applikationen. Das Überwachen kann beispielsweise durch Erfassen von Datenpaketen erfolgen, indem die Header der Datenpakete gelesen werden, oder durch Erfassen der Datenmenge, die über bestimmte Ports übertragen werden, die jeweils einer Datenverbindung zugeordnet sind.

Wünscht eine Applikation eines Gerätes des Kraftfahrzeuges den Aufbau einer Datenverbindung, dann stellt sie eine entsprechende Anfrage an das Kommunikationsorganisationsmodul, mit welcher vorbestimmte Parameter der gewünschten Datenverbindung übermittelt werden. Diese Parameter sind die für die jeweilige Datenverbindung im oben erläuterten Applikationsprofilregister eingetragenen Parameter, wie zum Beispiel der Identifikationsbezeichner der Applikation, die Applikationsklasse, die Priorität der Datenverbindung, die minimale bzw. maximale Datenrate, die maximale Fehlerrate, die maximale Latenz, etc., wobei bei statischen Applikationen die minimale gleich der maximalen Datenrate ist.

Falls die zentrale Kommunikationseinheit ein Verbindungsregister aufweist, kann das Kommunikationsorganisationsmodul mit Hilfe der in diesem eingetragenen Parameter feststellen, ob die zur Verfügung stehenden externen Verbindungskapazitäten für die Datenverbindung der Applikation ausreichen, die Anfrage der Applikation entsprechend beantworten und eine Datenverbindung bereitstellen, falls diese für die Applikation ausreichen. In letzterem Fall trägt die zentrale Kommunikationseinheit im Verbindungsregister einen Identifikationsbezeichner für die Datenverbindung ein, den sie gleichzeitig an die Applikation übermittelt.

Falls die zentrale Kommunikationseinheit ein Applikationsprofilregister aufweist, trägt das Kommunikationsorganisationsmodul in dieses die bei der Anfrage von der Applikation empfangenen Parameter für die spätere Verwendung ein.

Vorzugsweise wird bei diesem Verfahren eine zentrale Kommunikationseinheit verwendet, wie sie oben erläutert ist.

Die Erfindung wird beispielhaft näher anhand der Zeichnungen erläutert. In den Zeichnungen zeigen:

Figur 1 schematisch eine zentrale Kommunikationseinheit gemäß der vorliegenden Erfindung mit mehreren Geräten eines Kraftfahrzeuges sowie mehreren Funkkanälen zu Kommunikationspartnern,

Figur 2 ein Verfahren zum Anmelden einer Datenverbindung in einem Flussdiagramm,

Figur 3 schematisch Zuordnungen mehrerer Funkkanäle zu mehreren Datenverbindungen und dieser zu mehreren Applikationen (Fig. 3A), wobei die Zuordnungen durch Pfeilverbindungen dargestellt sind, zusammen mit einer Darstellung eines zugehörigen Verbindungsregisters (Fig. 3B) und eines zugehörigen Applikationsprofilregisters (Fig. 3C),

Figur 4 ein Verfahren zum Verwalten der Datenverbindungen in einem Flussdiagramm, wobei ein Verbindungsregister und ein Applikationsprofilregister vorhanden sind und ein Verfahrensabschnitt (Block) B1 einzelne Schritte des Verfahrens umfasst und

Figur 5 einzelne Schritte eines Verfahrensabschnitts (Block) B2 eines Verfahrens zum Verwalten der Datenverbindungen in einem Flussdiagramm, wobei ein Verbindungsregister und ein Applikationsprofilregister vorhanden sind und der Verfahrensabschnitt B1 der Figur 4 durch den Verfahrensabschnitt B2 der Figur 5 ersetzt werden kann.

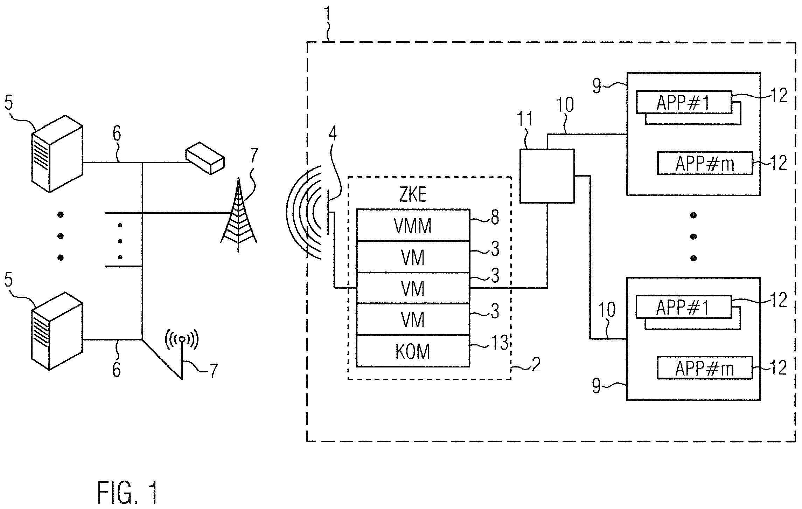

Ein Kraftfahrzeug 1 weist eine zentrale Kommunikationseinheit 2 (ZKE) auf (Fig. 1). Die zentrale Kommunikationseinheit 2 umfasst mehrere Verbindungsmodule 3 (VM). Jedes Verbindungsmodul 3 ist mit einer Antenne 4 verbunden, mit welcher Funksignale gesendet und empfangen werden können.

Ein jedes Verbindungsmodul 3 kann einen Funkkanal gemäß einem oder mehreren vorbestimmten Standards zu externen Kommunikationspartnern 5 herstellen und aufrechterhalten. Die externen Kommunikationspartner 5 sind in der Regel Server, die über ein Datennetzwerk 6, insbesondere dem Internet, mit Sende-/Empfangseinrichtungen 7 verbunden sind. Die externen Kommunikationspartner 5 können auch natürliche Personen sein, die mittels Telefongeräten über Telefonleitungen (Datennetzwerk 6) mit entsprechenden Sende-/Empfangseinrichtungen 7 verbunden sind, wobei die Datenverbindung nicht über das Modem des in dem Kraftfahrzeug 1 vorhandenen Mobiltelefons, sondern über eines der Verbindungsmodule 3 zustande kommt.

Die Verbindungsmodule 3 sind beispielsweise zum Kommunizieren über folgende Funkstandards ausgebildet: GSM, GPRS, EDGE, 3G/UMTS, HSPA, 4G/LTE, ETSI ITS-G5, und/oder WLAN (IEEE802.11a, IEEE802.11b, IEEE802.11ac, IEEE802. 11ad, IEEE802.11g, IEEE802.11h, IEEE802.11n, IEEE 802.11p). Mit einem jeden Verbindungsmodul 3 kann mindestens ein Funkkanal betrieben werden, so dass durch das Vorsehen mehrerer Verbindungsmodule 3 gleichzeitig mehrere Funkkanäle betrieben werden können, die auch unterschiedlichen Standards entsprechen können, wie zum Beispiel bei MIMO (Multiple Input Multiple Output). Die einzelnen Verbindungsmodule 3 werden von einem Verbindungsmodulmanager 8 (VMM) gesteuert, der automatisch die geeignetsten Funkkanäle nach vorbestimmten Kriterien auswählt.

Der Verbindungsmodulmanager 8 steuert somit automatisch die Funkkanäle zwischen der zentralen Kommunikationseinheit 2 und den externen Sende-/Empfangseinrichtungen 7. Diese Steuerung erfolgt nach vorbestimmten Kriterien, insbesondere nach der Verfügbarkeit der einzelnen Funkkanäle, der Bandbreite, der verfügbaren Datenrate, der Kosten, der Latenz und der Fehlerrate. Wird nur eine geringe Bandbreite benötigt und steht ein kostenfreier Funkkanal mit ausreichender Bandbreite zur Verfügung, dann wird beispielsweise dieser verwendet, wohingegen bei Bedarf nach einer höheren Bandbreite ein eventuell kostenpflichtiger, aber ausreichend Bandbreite aufweisender Funkkanal verwendet wird.

Der Verbindungsmodulmanager 8 weist ein Verbindungsregister auf, in dem ein oder mehrere Parameter zu den jeweiligen Funkkanälen bzw. Datenverbindungen gespeichert sind. Diese Parameter umfassen insbesondere einen Identifikationsbezeichner für die Datenverbindung, die Zuordnung eines Funkkanals zu der jeweiligen Datenverbindung, die der Datenverbindung über den Funkkanal zugeordnete Datenrate, die aktuelle Bandbreite bzw. Datenrate des Funkkanals, die aktuelle Fehlerrate des Funkkanals, die aktuelle Latenz des Funkkanals und die Datenübertragungskosten des Funkkanals.

Das jeweilige Verbindungsmodul 3 sucht zyklisch nach neuen Funkkanälen im entsprechenden Standard bzw. Funksystem und meldet neu gefundene mit deren Parametern an den Verbindungsmodulmanager 8 weiter. Ebenso meldet es einen Verlust einer Funkverbindung oder eine Änderung der Parameter an diesen.

Durch eine periodisch durchgeführte Aktualisierung der Werte im Verbindungsregister stellt der Verbindungsmodulmanager 8 sicher, dass jederzeit die aktuellen Werte im Verbindungsregister eingetragen sind.

Falls ein Verlust oder eine Änderung eines Funkkanals ermittelt wird, so kann der Verbindungsmodulmanager 8 das entsprechende Verbindungsmodul 3 anweisen, einen neuen Funkkanal in dessen zugehörigem Funksystem zu suchen.

Mehrere Geräte 9 sind mit der zentralen Kommunikationseinheit 2 über ein Datennetzwerk 10 verbunden. Das Datennetzwerk 10 ist im vorliegenden Ausführungsbeispiel Ethernet. Das Datennetzwerk kann eine oder mehrere Switche 11 zum Verzweigen des Datennetzwerkes aufweisen. Auf einem jeden Gerät ist zumindest eine Applikation 12 vorgesehen, welche im Betrieb eine logische Datenverbindung über die zentrale Kommunikationseinheit 2 zu einer externen Sende-/Empfangseinrichtung 7 benötigt, wobei die Applikationen 12 vom statischen oder dynamischen Typ sein können.

Die zentrale Kommunikationseinheit 2 weist ein Kommunikationsorganisationsmodul 13 (KOM) auf, das die zur Verfügung stehenden externen Verbindungskapazitäten zwischen der zentralen Kommunikationseinheit 2 und den externen Sende-/Empfangseinrichtungen 7 aktiv nach vorbestimmten Kriterien auf einzelne aktive Datenverbindungen der Applikationen 12 aufteilt.

Das Kommunikationsorganisationsmodul 13 weist ein Applikationsprofilregister auf, in dem ein oder mehrere Parameter zu den jeweiligen statischen und/oder dynamischen Applikationen12 gespeichert sind. Diese Parameter umfassen insbesondere einen Identifikationsbezeichner für die Applikation 12, eine Zuordnung einer Datenverbindung, die der Applikation über die zugeordnete Datenverbindung aktuell gewährte Datenrate, die Applikationsklasse, die Priorität für eine Datenverbindung über einen bestimmten Funkkanal, die minimale Datenrate der Datenübertragung der Applikation 12, die maximale Datenrate der Datenübertragung der Applikation 12, die maximale Fehlerrate und die maximale Latenz der Datenverbindung. Die Speicherung der der Datenverbindung der Applikation 12 aktuell gewährten Datenrate im Applikationsprofilregister ist optional, da sie sich aus der Summe der den jeweiligen Funkkanälen zugeordneten Datenraten der Datenverbindung der Applikation ergibt, die im Verbindungsregister gespeichert sind.

Alternativ kann das Kommunikationsorganisationsmodul 13 das Verbindungsregister und/oder der Verbindungsmodulmanager 8 das Applikationsprofilregister aufweisen.

Das Kommunikationsorganisationsmodul 13 kann nach vorbestimmten Kriterien die Verbindungskapazitäten zwischen den einzelnen aktiven Datenverbindungen aufteilen. Diese Kriterien sind vor allem der Bedarf an Verbindungskapazität der unterschiedlichen Datenverbindungen und/oder deren Priorität.

Die Priorität kann explizit durch entsprechende Vorgaben festgelegt sein. Die Priorität kann sich jedoch implizit beispielsweise anhand der Applikationsklassen ergeben.

Eine typische Aufteilung der Applikationsklassen kann folgendermaßen aussehen:

| | |
|---|---|
| 1. Klasse: | Notruf; |
| 2. Klasse: | Verkehrsnachrichten ; |
| 3. Klasse: | Telefonieren, VOIP und Streaming von Audio- und/oder Videodateien, wie zum Beispiel Radiostreaming, Musikstreaming oder Videostreaming; |
| 4. Klasse: | ftp-Anwendungen und Web-Seiten. |

Die einzelnen Klassen sind nach ihrer Priorität sortiert, wobei die 1. Klasse die höchste Priorität und die 4. Klasse die geringste Priorität besitzt.

Sind die Applikationsklassen im Applikationsprofilregister eingetragen, dann kann das Kommunikationsorganisationsmodul 13 in Abhängigkeit der vorhandenen Applikationsklassen entscheiden, welche Datenverbindung eine höhere Priorität und welche Datenverbindung eine geringere Priorität besitzen und bei Engpässen an Verbindungskapazitäten die entsprechenden Verbindungskapazitäten für Datenverbindungen mit geringer Priorität reduzieren.

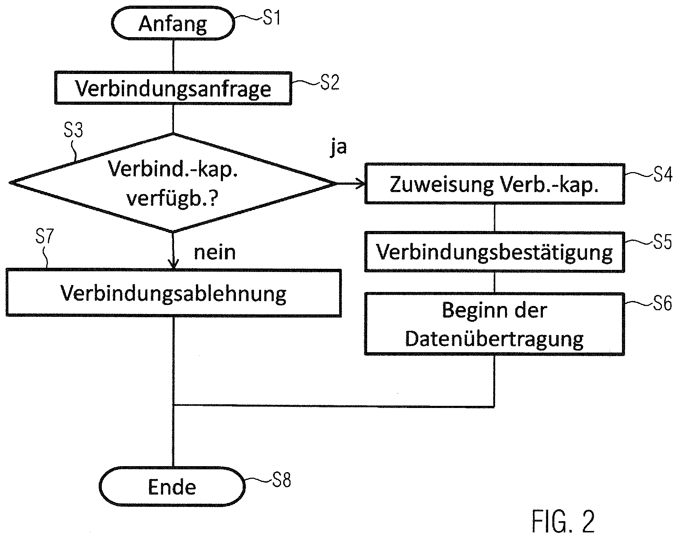

Nachfolgend wird anhand von Figur 2 der Aufbau einer Datenverbindung aus Sicht des Kommunikationsorganisationsmoduls 13 erläutert:

Das Verfahren beginnt mit dem Schritt S1. Im Schritt S2 wird eine Verbindungsanfrage von einer Applikation 12 erhalten.

Die Verbindungsanfrage wird dahingehend überprüft (Schritt S3), ob entsprechende Verbindungskapazitäten verfügbar sind, wobei das Kommunikationsorganisationsmodul 13 durch Auslesen der Einträge im Verbindungsregister feststellt, ob eine ausreichende Datenverbindung möglich ist. Bei der Überprüfung der Verbindungsanfrage werden die mit der Verbindungsanfrage übermittelten Parameter ausgelesen und berücksichtigt und falls bereits Verbindungen über Funkkanäle bestehen, mit diesen verglichen. Weiterhin wird die gesamte, zur Verfügung stehende externe Verbindungskapazität ermittelt. In Abhängigkeit dieser Parameter wird entschieden, ob für die vorliegende Verbindungsanfrage eine ausreichende externe Verbindungskapazität verfügbar ist.

Die Zuordnung der Verbindungskapazität zu einer Datenverbindung kann durch das Kommunikationsorganisationsmodul 13 zusätzlich hinsichtlich der Minimierung der Übertragungskosten erfolgen.

Wenn eine ausreichende externe Verbindungskapazität verfügbar ist, dann geht der Verfahrensablauf auf den Schritt S4 über, in dem der Applikation 12 die entsprechende Verbindungskapazität zugewiesen wird. Hierbei werden die Einträge im Verbindungsregister ggf. dupliziert und angepasst, indem dem entsprechenden Funkkanal oder den entsprechenden Funkkanälen die neu zu erstellende Datenverbindung durch Eintragen eines Identifikationsbezeichners für die Datenverbindung zugeordnet wird, und die mit der Verbindungsanfrage übermittelten Parameter und der Identifikationsbezeichner der Datenverbindung für die Zuordnung der Datenverbindung zu der Applikation 12 zusammen mit der gewährten Datenrate in das Applikationsprofilregister des Kommunikationsorganisationsmoduls 13 eingetragen. Hiermit ist der die Verbindungsanfrage stellenden Applikation 12 die entsprechende Verbindungskapazität reserviert bzw. die logische Datenverbindung eingerichtet. Im Schritt S5 schickt das Kommunikationsorganisationsmodul 13 eine Verbindungsbestätigung, bei dynamischen Applikationen 12 mit der gewährten Datenrate, an die die Verbindungsanfrage stellende Applikation 12. Nach Erhalt der Verbindungsbestätigung beginnt die Applikation 12 mit der Datenübertragung (Schritt S6) über die vom Kommunikationsorganisationsmodul 13 eingerichtete Datenverbindung.

Wird im Schritt S3 festgestellt, dass keine ausreichende Verbindungskapazität verfügbar ist, dann geht der Verfahrensablauf auf den Schritt S7 über, in dem das Kommunikationsorganisationsmodul 13 der die Verbindungsanfrage stellenden Applikation 12 eine Verbindungsablehnung sendet, d.h., eine Nachricht, die enthält, dass keine Datenverbindung eingerichtet werden kann.

Im Schritt S7 kann das Kommunikationsorganisationsmodul 13 zusammen mit der Verbindungsablehnung der die Verbindungsanfrage stellenden Applikation 12 eine Nachricht senden, in der die verfügbare Verbindungskapazität bzw. die aktuell mögliche Datenrate, Fehlerrate und/oder Latenz übermittelt werden, so dass die jeweilige Applikation 12, sofern sie eine Applikation 12 der dynamischen Art ist und ihr zu erbringender Dienst dieses technisch zulässt, eine neue Anfrage mit geänderten Parametern bzw. mit niedrigeren Anforderungen stellen kann. Somit wird das Verfahren erneut ausgeführt.

Nach den Schritten S6 und S7 wird das Verfahren zum Einrichten einer Datenverbindung beendet (Schritt S8).

Hat die Applikation 12 eine Verbindungsablehnung erhalten, dann kann sie zu einem späteren Zeitpunkt erneut eine Verbindungsanfrage absenden.

Wurde hingegen eine Datenverbindung aufgebaut, dann überwacht das Kommunikationsorganisationsmodul 13 die über die jeweiligen Datenverbindungen übertragenen Datenmengen und die zur Verfügung stehenden externen Verbindungskapazitäten. Ändern sich die externen Verbindungskapazitäten, dann können diese neu zwischen den bestehenden Datenverbindungen bzw. den Applikationen 12 verteilt werden. Verringern sich die externen Verbindungskapazitäten, so kann zunächst den Datenverbindungen der dynamischen Applikationen 12 mit geringerer Priorität weniger Verbindungskapazität zugewiesen werden. Sollte dieses nicht ausreichend sein, um allen Applikationen 12 genügend Datenrate zur Verfügung zu stellen, dann kann auch den dynamischen Applikationen 12 mit einer höheren Priorität weniger Verbindungskapazität zugeteilt werden. Falls dieses dann weiter nicht ausreichend ist und alle dynamischen Applikationen 12 deren geringstmögliche Datenrate eingestellt haben, dann können die statischen Applikationen 12 in der Reihenfolge ihrer Priorität (von der geringsten bis zur höchsten Priorität) durch das Kommunikationsorganisationsmodul 13 durch das Senden einer Terminierungsnachricht beendet werden oder deren Datenverbindung aufgehoben werden. Erhöhen sich die externen Verbindungskapazitäten, dann können zunächst die Datenverbindungen der dynamische Applikationen 12 mit höherer Priorität mehr Verbindungskapazität erhalten. Sind noch weitere Verbindungskapazitäten verfügbar, dann können auch den Datenverbindungen der dynamische Applikationen 12 mit geringerer Priorität mehr Verbindungskapazität zugeteilt werden. Da sich während einer Fahrt mit dem Kraftfahrzeug die Verbindungskapazität der einzelnen Funkkanäle bzw. deren Datenrate entlang der Strecke häufig ändern, kann es dementsprechend zu Änderungen der Zuweisungen der Verbindungskapazitäten kommen.

Im vorliegenden Ausführungsbeispiel ist das Datennetzwerk zwischen der zentralen Kommunikationseinheit 2 und den Geräten 9 ein Ethernet, bei dem die Daten paketweise übermittelt werden. Ein jedes Paket weist einen Header auf, in dem zum Einen Informationen über die Applikation, die das Datenpaket erzeugt hat, als auch Informationen über die im Paket enthaltene Datenmenge enthalten sind. Diese Informationen können vom Kommunikationsorganisationsmodul 13 gelesen werden, so dass die einzelnen Pakete den jeweiligen Applikationen 12 bzw. deren jeweiligen Datenverbindungen zugeordnet werden können. Anhand der hierbei festgestellten Datenmenge kann der Datenfluss in den einzelnen Datenverbindungen überwacht werden. Die Pakete der unterschiedlichen Applikationen 12 werden entsprechend der zugewiesenen Verbindungskapazitäten über den Funkkanal zwischen der zentralen Kommunikationseinheit

**EP 3 092 829 B1**

2 und den Sende-/Empfangseinrichtungen 7 übertragen. So werden beispielsweise Datenpakete einer Datenverbindung, welcher eine größere Verbindungskapazität zugeordnet ist, häufiger als Datenpakete einer anderen Datenverbindung, welcher eine geringere Verbindungskapazität zugeordnet ist, übertragen. Hierdurch wird eine quasi-gleichzeitige Übermittlung der Daten auf den unterschiedlichen Datenverbindungen entsprechend den eingestellten Verbindungskapazitäten erzielt.

Wird die Datenverbindung nicht mehr benötigt, so wird der der Datenverbindung bzw. Applikation 12 zugeordnete Eintrag im Applikationsprofilregister gelöscht. Außerdem werden im Verbindungsregister die entsprechende Zuordnung eines Funkkanals oder mehrerer Funkkanäle zu der Datenverbindung aufgehoben, indem in allen für die aufzuhebende Datenverbindung vorhandenen Einträgen der Identifikationsbezeichner der Datenverbindung gelöscht wird. Danach werden diese Einträge alle gelöscht, falls die dort eingetragenen Funkkanäle noch jeweils mindesten einer anderen Datenverbindung zugeordnet sind. Falls jedoch die dort eingetragenen Funkkanäle keiner anderen Datenverbindung zugeordnet sind, so werden alle dieser Einträge bis auf einen einzigen gelöscht. Dadurch bleiben im Verbindungsregister die Einträge der Funkkanäle, die aktuell keiner Datenverbindung zugeordnet sind, für eine Umverteilung der Verbindungskapazitäten erhalten. Durch dieses Verfahren werden die Verbindungskapazitäten freigegeben und eine mögliche Umverteilung der Verbindungskapazitäten vorbereitet.

Das Ende eines über eine bestimmte Datenverbindung ausgeführten Kommunikationsvorganges kann entweder durch eine entsprechende Nachricht der jeweiligen Applikation 12 an das Kommunikationsorganisationsmodul 13 diesem mitgeteilt werden oder direkt vom Kommunikationsorganisationsmodul 13 anhand der Analyse der übertragenen Daten festgestellt werden.

Das Kommunikationsorganisationsmodul 13 kann auch bei nicht ausreichenden Verbindungskapazitäten die Übertragung der jeweilige Applikation 12 beenden bzw. dieser eine Terminierungsnachricht zukommen lassen.

Mit der oben erläuterten zentralen Kommunikationseinheit 2 können somit mehrere Applikationen 12 gleichzeitig jeweils eine logische Datenverbindung zu externen Kommunikationspartnern 5 betreiben, wobei die Verteilung der Verbindungskapazität den sich in der Regel permanent entlang einer Fahrstrecke ändernden Verbindungskapazitäten dynamisch angepasst wird. Weiterhin ist sichergestellt, dass wichtige Nachrichten und Informationen mit erhöhter Priorität übermittelt werden, so dass bei geringen Verbindungskapazitäten deren Übermittlung sichergestellt ist.

Das Kommunikationsorganisationsmodul 13 kann auch in den Kapazitätsbedarf der einzelnen Applikationen 12 eingreifen, indem es einer dynamischen Applikation 12 die maximal erreichbare bzw. zur Verfügung stehende Datenrate bzw. die gesamte verfügbare Verbindungskapazität der Funkkanäle mit der Verbindungsablehnung (Schritt S7) mitteilt, wobei die dynamische Applikation 12 auf dieser Information basierend ihren Kapazitätsbedarf durch Einstellen eines ihrer Applikationsmodi anpassen kann. Zum Beispiel kann eine dynamische Applikation 12 die Übertragungsart, wie zum Beispiel den Codec, ändern, um so die Verbindungskapazitäten der einzelnen Datenverbindungen an die zur Verfügung stehende gesamte externe Funk-Verbindungskapazität anzupassen. Bei einer hohen Verbindungskapazität werden Bilder, Filme und Musik beispielsweise mit höherer Qualität als bei geringerer Verbindungskapazität übertragen, während bei geringer Verbindungskapazität beispielsweise die Auflösung eines Videostreams oder die Datenrate durch dynamisch-adaptives Streaming verringert wird, indem entsprechende Streamingverfahren Verwendung finden, wie zum Beispiel DASH oder SVC.

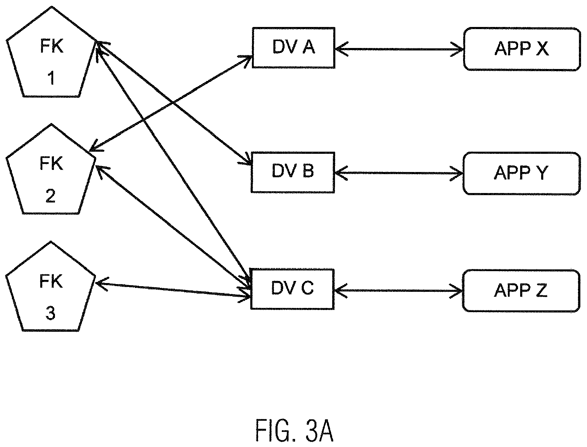

Figur 3A zeigt schematisch eine Zuordnung verschiedener Funkkanäle (FK) FK1, FK2 und FK3 zu verschiedenen Datenverbindungen (DV) A, B und C, wobei der Funkkanal FK1 den Datenverbindungen B und C, der Funkkanal FK2 den Datenverbindungen A und C und der Funkkanal FK3 der Datenverbindung C zugeordnet ist. Weiter ist in Figur 3A die Zuordnung der Datenverbindungen A, B und C zu den Applikationen (APP) X, Y und Z gezeigt, wobei die Applikation X der Datenverbindung A, die Applikation Y der Datenverbindung B und die Applikation Z der Datenverbindung C zugeordnet ist.

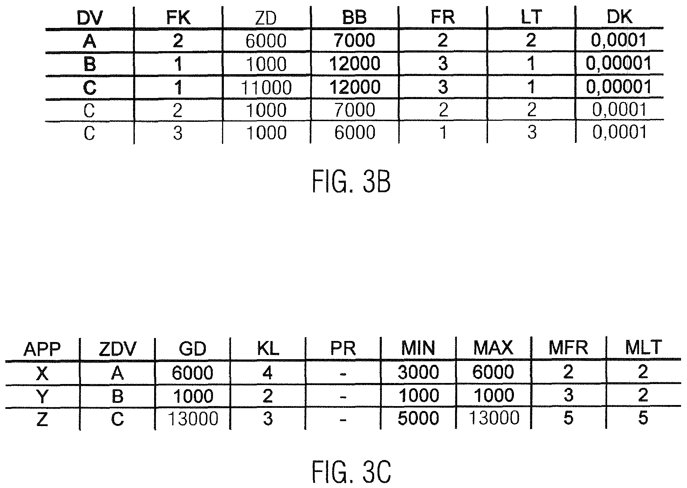

Die zugehörigen Einträge im Verbindungsregister zeigt Figur 3B mit den Abkürzungen DV für Datenverbindung, FK für Funkkanal, ZD für die der Datenverbindung zugeordnete Datenrate des Funkkanals in kBit/s, BB für aktuelle Bandbreite bzw. Datenrate des Funkkanals in kBit/s, FR für aktuelle Fehlerrate des Funkkanals in kBit/s, LT für aktuelle Latenz des Funkkanals in ms, und DK für volumenabhängige Datenübertragungskosten des Funkkanals in ct/kBit. Die Datenübertragungskosten können auch zeitabhängig sein (bspw. in der Einheit ct/s), so dass der Verbindungsmodulmanager 8 diese Kosten mit Hilfe der Datenrate bzw. Bandbreite oder der Verbindungskapazität in volumenabhängige Datenübertragungskosten umrechnet, bevor er diese in das Register einträgt.

Im Folgenden stellt n einen Laufindex für den jeweiligen Funkkanal FK dar, wobei sich n zwischen 1 und 3 bewegt, da im vorliegenden Beispiel 3 Funkkanäle vorhanden sind. Die Anzahl der Funkkanäle kann sich mit der Zeit ändern.

Eine Berechnung der über einen Funkkanal n zur Verfügung stehenden Verbindungskapazität $VK(n)$ kann durch Kombination der im Verbindungsregister gespeicherten Parameter für die aktuelle Bandbreite bzw. Datenrate des Funkkanals $BB(n)$ und für die aktuelle Fehlerrate des Funkkanals $FR(n)$ erfolgen, indem die Fehlerrate $FR(n)$ von der Bandbreite $BB(n)$ subtrahiert wird.

Vorteilhafterweise wird diese Berechnung bei einem erfolgenden Zugriff des Kommunikationsorganisationsmoduls 13 auf das Verbindungsregister pro Funkkanal nur einmal ausgeführt, wobei sich beispielsweise folgende Werte ergeben:

$$VK(1) = 12000 \text{ kBit/s} - 3 \text{ kBit/s} = 11997 \text{ kBit/s}$$

$$VK(2) = 7000 \text{ kBit/s} - 2 \text{ kBit/s} = 6998 \text{ kBit/s}$$

$$VK(3) = 6000 \text{ kBit/s} - 1 \text{ kBit/s} = 5999 \text{ Kbit/s}$$

Die gesamte zur Verfügung stehende Verbindungskapazität (GVK) wird durch Addition der Einzelwerte der Funkkanäle ermittelt:

$$GVK = 11997 \text{ kBit/s} + 6998 \text{ kBit/s} + 5999 \text{ kBit/s} = 24994 \text{ kBit/s}$$

Eine Zuordnungsreihenfolge der über einen Funkkanal zur Verfügung stehenden Verbindungskapazität unter Berücksichtigung der Datenübertragungskosten kann durch Sortieren der Funkkanäle nach deren Datenübertragungskosten vom günstigsten zum teuersten Funkkanal erfolgen. Gibt es mehrere Funkkanäle mit den gleichen Datenübertragungskosten, dann können diese nach ihrer Datenrate bzw. Bandbreite oder Verbindungskapazität vom schnellsten zum langsamsten sortiert werden. Im vorliegenden Ausführungsbeispiel ergibt sich durch dieses Verfahren folgende Reihenfolge:
FK1, FK2, FK3

Figur 3C zeigt das zugehörige Applikationsprofilregister, mit den Abkürzungen APP für den Identifikationsbezeichner der Applikation, ZDV für zugeordnete Datenverbindung, GD für gewährte Datenrate in kBit/s, KL für Applikationsklasse, PR für Priorität über eine bestimmte Funkverbindung, MIN für minimale Datenrate in kBit/s, MAX für maximale Datenrate in kBit/s, MFR für maximale Fehlerrate in kBit/s, MLT für maximale Latenz in ms der Applikation 12.

Die Speicherung der der Datenverbindung der Applikation 12 aktuell gewährten Datenrate GD im Applikationsprofilregister ist optional, da sie sich aus der Summe der den jeweiligen Funkkanälen zugeordneten Datenraten ZD der Datenverbindung der Applikation ergibt, die im Verbindungsregister gespeichert sind.

Fordert eine Applikation 12 eine Datenverbindung an, dann überprüft das Kommunikationsorganisationsmodul 13 deren Parameter und ordnet der Applikation 12 eine Datenverbindung zu, die die Anforderungen der Applikation hinsichtlich der Datenrate bzw. Bandbreite, der Fehlerrate, der Latenz und/oder der Priorität der Datenverbindung über einen bestimmten Funkkanal erfüllt. Die Zuordnung kann nach Datenverbindungskosten in aufsteigender Reihenfolge erfolgen.

Das Zuordnungsverfahren, aus dem die in Figuren 3B und 3C gezeigten Registerwerte resultieren, wird im Folgenden beschrieben:
Zunächst hat die Applikation X eine Datenverbindung angefordert. Aufgrund deren Einschränkungen durch deren maximale Fehlerrate und Latenz konnte ihr bzw. ihrer Datenverbindung A nur einer der am wenigsten kostengünstigen Funkkanäle, der Funkkanal FK2, zugeordnet werden. Dann hat die Applikation Y eine Datenverbindung angefordert, wonach dieser Applikation bzw. deren Datenverbindung B der kostengünstigste Funkkanal FK1 zugeordnet werden konnte. Da die restliche Verbindungskapazitäten des Funkkanals FK1 und nachfolgend des Funkkanals FK2 nicht ausreichend waren, um die darauffolgende Anforderung der Applikation Z vollständig zu erfüllen, wurde ein erster Teil deren Datenverbindung C dem kostengünstigsten Funkkanal FK1, ein zweiter Teil deren Datenverbindung C einem der am wenigsten kostengünstigen Funkkanäle, dem Funkkanal FK2, und der dritte und restliche Teil dem anderen der am wenigsten kostengünstigen Funkkanäle und dem langsamsten Funkkanal FK3, zugeordnet.

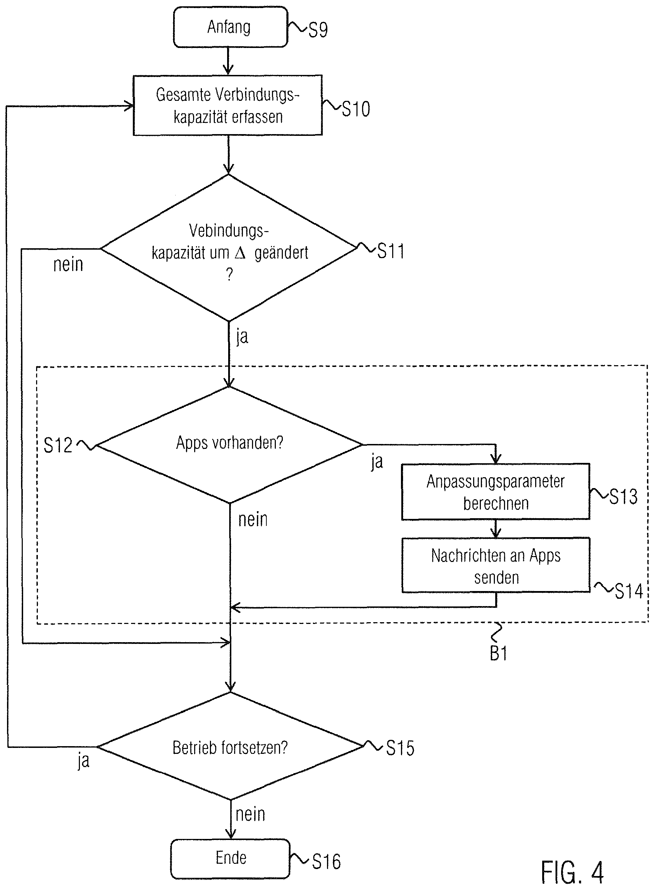

Nachfolgend wird anhand von Figur 4 ein Verfahren zum Verwalten der Datenverbindungen aus Sicht des Kommunikationsorganisationsmoduls 13 erläutert, wobei diese überwacht, ggf. aufgehoben und/oder umverteilt werden. Bei diesem Verfahren wird eine zentrale Kommunikationseinheit 2 verwendet, die ein Verbindungsregister und ein Applikationsprofilregister aufweist, jeweils mit den oben beschriebenen Einträgen versehen:
Das Verfahren beginnt mit dem Schritt S9.

Im Schritt S10 ermittelt das Kommunikationsorganisationsmodul 13 die gesamte zur Verfügung stehende Verbindungskapazität, indem es die im Verbindungsregister durch den Verbindungsmodulmanager 8 eingetragenen Parameter miteinander kombiniert, wie es oben beschrieben ist.

Das Kommunikationsorganisationsmodul 13 überprüft im Schritt S11, ob sich die Verbindungskapazität wenigstens um einen vorbestimmten Schwellenwert Δ geändert hat, sich also erhöht oder verringert hat. Dieser Schwellenwert Δ stellt einen Toleranzwert dar und beschreibt, wie groß eine Änderung der Verbindungskapazität sein muss, damit eine Umverteilung durchgeführt wird. Durch dessen Verwendung verteilt das Kommunikationsorganisationsmodul 13 die zur Verfügung stehenden externen Verbindungskapazitäten erst dann zwischen den Applikationen 12 um, wenn sich die gesamte externe Verbindungskapazität um mindestens den Schwellenwert Δ geändert hat. Dieses ist vorteilhaft, da dann häufig auftretende, geringfügige (geringer als Δ) Schwankungen der gesamten zur Verfügung stehenden externen Verbindungskapazität nicht berücksichtigt werden und somit nicht zu einer unmittelbaren Umverteilung der Verbindungskapazitäten der Datenverbindungen bzw. Applikationen 12 führen.

Dabei kann der Schwellenwert Δ von der zuletzt verteilten gesamten externen Verbindungskapazität, von den Anforderungen der Applikationen 12 und/oder von der gesamten zur Verfügung stehenden Verbindungskapazität abhängen oder ein fester Wert sein. Zum Beispiel kann er zur gesamten zur Verfügung stehenden Verbindungskapazität proportional sein und sich somit dynamisch verändern, d.h. je geringer die Verbindungskapazität, desto geringer der Schwellenwert Δ. Alternativ oder in Kombination kann er von der Fähigkeit der Applikationen abhängen, während des Betriebs die genutzte Datenrate um einen erheblichen Betrag ändern zu können. Zum Beispiel kann der Schwellenwert Δ bei Applikationen, die in der Lage sind sich an eine geringere als ihre gewährte Datenrate selbsttätig anzupassen, dementsprechend größer bestimmt werden.

Auch kann der Wert von Δ einen Sicherheitsbetrag umfassen, so dass bei einer vollständigen Verteilung der gesamten externen Verbindungskapazität und bei einer folgenden Verringerung dieser gesamten externen Verbindungskapazität, die kleiner als Δ ist, den einzelnen Datenverbindungen bzw. Applikationen 12 auch ohne Umverteilung noch jeweils genügend Verbindungskapazität zur Verfügung steht.

Wenn sich die Verbindungskapazität um mehr als den vorbestimmten Schwellenwert Δ geändert hat, dann geht der Verfahrensablauf auf den Schritt S12 über, in dem das Kommunikationsorganisationsmodul 13 ermittelt, ob Applikationen 12 vorhanden sind. Hierbei werden vorzugsweise die Einträge in APP ausgelesen. Alternativ kann jeder andere Eintrag, z.B. in ZDV, in MIN und/oder in MAX ausgelesen werden. Falls ein Eintrag vorhanden ist, so ist auch eine aktive bzw. datenübertragende Applikation 12 vorhanden.

Wenn Applikationen 12 vorhanden sind, dann berechnet das Kommunikationsorganisationsmodul 13 im Schritt S13 die jeweiligen Anpassungsparameter für die aktiven Applikationen 12.

Die Anpassungsparameter beschreiben die von den jeweiligen Applikationen 12 vorzunehmenden Änderungen um eine bestimmte, der Applikation 12 zugewiesene Verbindungskapazität, insbesondere eines oder mehrerer bestimmter Funkkanäle, zu benutzen. Mit den Anpassungsparametern kann eine Umverteilung der Zuordnung der Funkkanäle zu den Datenverbindungen und bei einem Funkkanal eine Umverteilung der durch die jeweiligen Datenverbindungen belegten Verbindungskapazität stattfinden.

Diese Berechnung kann bzw. soll zu einer optimalen Verteilung der Verbindungskapazität zwischen den Datenverbindungen der einzelnen Applikationen 12 führen, so dass jede Applikation 12 eine ausreichende Datenverbindung erhält und vorzugsweise die gesamten Datenübertragungskosten möglichst niedrig sind.

Die Berechnung der Anpassungsparameter kann derart erfolgen, dass zunächst allen statischen Applikationen 12 nach der Reihenfolge ihrer Abspeicherung im Applikationsprofilregister eine ausreichende Verbindungskapazität gemäß ihren Anforderungen zugewiesen wird. Sollte dieses nicht möglich sein, weil z.B. für die Anforderung der statischen Applikation eine nicht genügende Verbindungskapazität zur Verfügung steht, so erhält die jeweilige statische Applikation 12 keine Verbindungskapazität zugeteilt. Danach wird eine ggf. übrig gebliebene Verbindungskapazität auf die dynamischen Applikationen 12 gleichmäßig verteilt.

Dieses Verfahren kann man abwandeln, indem man weitere Parameter, wie z.B. die zugeordnete Datenrate ZD, die gewährte Datenrate GD, die Priorität bzw. Klasse KL, die minimale Datenrate MIN, die maximale Datenrate MAX, die maximale Fehlerrate MFR und/oder die maximale Latenz MLT berücksichtigt.

Werden weitere Parameter berücksichtigt, so kann die Reihenfolge der Berechnung der Anpassungsparameter für die jeweilige Applikationsart miteinander vertauscht werden, d.h. die Berechnung der Anpassungsparameter für die statischen folgt der Berechnung der Anpassungsparameter für die dynamischen Applikationen 12.

Alternativ zum genannten Beispiel der Berechnung der Anpassungsparameter kann nach Zuteilung der Verbindungskapazität an die statischen Applikationen 12 und Vorhandensein restlicher Verbindungskapazität zunächst versucht werden, den dynamischen Applikationen 12 die durch sie angeforderte maximale Verbindungskapazität zuzuteilen. Sollte dieses nicht möglich sein, weil z.B. nicht ausreichend Verbindungskapazität vorhanden ist, so kann eine oder mehrere dynamische Applikationen 12, zum Beispiel nach der Reihenfolge der Abspeicherung im Applikationsprofilregister, ausgewählt werden und die Verbindungskapazität dieser Applikation 12 schrittweise bis zu ihrer minimal angeforderten Verbindungskapazität reduziert werden. Ist dann noch immer keine ausreichende Verbindungskapazität vorhanden, so erhält eine oder mehrere dynamische Applikationen 12 keine Verbindungskapazität zugeteilt.

Die Berechnung der Anpassungsparameter kann durchgeführt werden, indem das bei der Beschreibung der Figur 3C aufgeführte Zuordnungsverfahren nach der Reihenfolge der Applikationen 12 nach deren Klasse mit absteigender Priorität durchlaufen wird, d.h. es wird ein Funkkanal oder eine Verteilung auf mehrere Funkkanäle ermittelt, der für die jeweilige Applikation 12 hinsichtlich ihrer Parameter ausreichend und möglichst kostengünstig ist.

Wird bei der Verteilung der Verbindungskapazität auf die einzelnen Funkkanäle die Priorität und die maximale Datenrate der Applikation 12 berücksichtigt und demgemäß die vorhandene Verbindungskapazität auf einzelne Datenverbindungen verteilt, kann es sein, dass für weitere Datenverbindungen keine Verbindungskapazität mehr zur Verfügung steht. In einem solchen Fall kann die Berechnung der Anpassungsparameter fortgeführt werden, indem für die dynamischen Applikationen 12 nacheinander nach deren Klasse mit aufsteigender Priorität eine geringere Datenrate, die mindestens der von der Applikation 12 angeforderten Datenrate entspricht, bestimmt wird und in die Berechnung einfließt.

Sollte dieses immer noch nicht ausreichend sein, um allen aktiven Applikationen 12 eine ausreichende Datenverbindung zu ermöglichen, so können ein oder mehrere statische Applikationen 12 nacheinander nach deren Klasse mit aufsteigender Priorität bestimmt werden, die dann keine Verbindungskapazität erhalten sollen.

Sollte immer noch keine ausreichende Datenverbindung für alle aktiven Applikationen 12 möglich sein, so können zuletzt ein oder mehrere dynamische Applikationen 12 nacheinander nach deren Klasse mit aufsteigender Priorität bestimmt werden, die keine Verbindungskapazität erhalten sollen, d.h. die terminieren sollen.

Bei gleichen bzw. ähnlichen Parameterwerten, wie z.B. gleicher Priorität, kann die Auswahl einer bestimmten Applikation 12 nach dem Zufallsprinzip erfolgen (z.B. mittels Pseudozufallszahlen).

Die Anpassungsparameter werden den Applikationen 12, die sich an geänderte Verbindungskapazitäten anzupassen haben, im Schritt S14 über Nachrichten gesendet. Den dynamischen Applikationen 12, deren Verbindungskapazität sich erhöhen kann bzw. verringern muss, werden die neuen Werte für die Verbindungskapazität als Nachricht gesendet und den statischen Applikationen 12, deren Datenverbindung aufgehoben wird bzw. die zu terminieren haben, dieses mit einer Terminierungsnachricht mitgeteilt. Diese Nachricht kann zum Beispiel eine mit einer enthaltenen Verbindungskapazität gleich 0 sein.

Alternativ kann auch eine Nachricht, die alle Anpassungsparameter oder alle Parameter für die aktiven Applikationen 12 enthält, nacheinander an jede Applikation 12 oder über einen Broadcast an alle Applikationen 12 gleichzeitig gesendet werden.

Bei den dynamischen Applikationen 12, die ihre Datenrate zu ändern haben, aber nicht terminieren sollen, wird im Applikationsprofilregister die gewährte Datenrate eingetragen. Sollte eine Applikation 12 terminiert werden, so werden die entsprechenden Einträge der Applikation 12 im Applikationsprofilregister gelöscht.

Dann werden ggf. die Einträge im Verbindungsregister gemäß einer neuen Zuordnung der Verbindungskapazitäten aktualisiert.

Auf die erhaltene Nachricht passen sich die dynamischen Applikationen 12 gemäß den übermittelten Anpassungsparametern an, d.h. sie stellen ihre gewährte Datenrate ein und die dynamischen und statischen Applikationen 12, die eine Terminierungsnachricht erhalten haben, terminieren.

Nach dem Schritt S14 wird der Schritt S15 ausgeführt, in dem überprüft wird, ob der Betrieb fortzusetzen ist. Ist im Schritt S11 festgestellt worden, dass sich die Verbindungskapazität um zumindest den Schwellenwert $\Delta$ geändert hat, kann im gleichen Schritt S15 eine Neuberechnung des Schwellenwerts $\Delta$ stattfinden, wobei die neu ermittelte Verteilung der Verbindungskapazität bzw. die im Schritt S13 ermittelten Anpassungsparameter berücksichtigt werden können.

Falls das Verfahren weiter ausgeführt werden soll, so wird im Anschluss der Schritt S10 ausgeführt, falls nicht endet das Verfahren im Schritt S16.

Sollte im Schritt S11 festgestellt werden, dass sich die Verbindungskapazität nicht um den oben erläuterten, vorbestimmten Schwellenwert $\Delta$ geändert hat, dann wird das Verfahren mit Ausführen des Schritts S15 fortgesetzt.

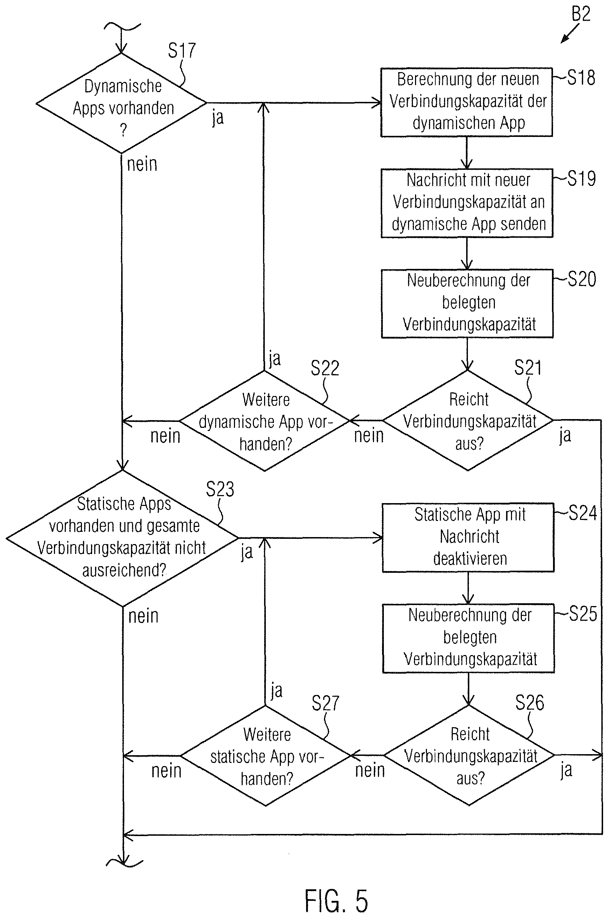

Die Schritte S12, S13 und S14 stellen einen Verfahrensabschnitt (Block) B1 zum Anpassen der Verbindungskapazität dar, wenn sich die festgestellte Verbindungskapazität um den vorbestimmten Schwellenwert $\Delta$ geändert hat. Anstelle dieses Verfahrensabschnitts B1 kann auch ein bevorzugter Verfahrensabschnitt (Block) B2 verwendet werden, der in Figur 5 gezeigt ist, und sich wiederum zwischen den Schritten S11 und S15 aus Figur 4 erstreckt.

Nachdem im Schritt S11 eine Änderung der Verbindungskapazität um zumindest den vorbestimmten Schwellenwert $\Delta$ festgestellt worden ist, beginnt der Verfahrensabschnitt B2 mit dem Schritt S17, in dem überprüft wird, ob dynamische Applikationen 12 vorhanden sind. Hierbei werden die Einträge in MIN und in MAX ausgelesen und deren Werte miteinander verglichen. Sind deren Werte unterschiedlich, so existiert mindestens eine dynamische Applikation 12. Wenn dynamische Applikationen 12 vorhanden sind, dann wählt das Kommunikationsorganisationsmodul 13 eine solche Applikation 12 aus. Diese Auswahl erfolgt vorzugweise gemäß der Klasse bzw. Priorität der dynamischen Applikation 12 mit aufsteigender Priorität, kann aber auch nach anderen Parametern bestimmt sein, wie z.B. der Reihenfolge der dynamischen Applikationen 12 im Applikationsprofilregister oder deren maximal mögliche Änderung bezüglich deren Datenrate.

Wird im Schritt S17 festgestellt, dass dynamische Applikationen 12 vorhanden sind und demzufolge eine ausgewählt, dann wird im Schritt S18 für diese Applikation 12 die neue der Applikation zur Verfügung gestellte Verbindungskapazität berechnet. Dabei wird die Änderung der gesamten Verbindungskapazität in die Berechnung einbezogen. Dabei wird darauf geachtet, dass die Applikation 12 eine ausreichende Verbindungskapazität erhält, d.h. diese muss mindestens gleich dem entsprechenden Wert in MIN sein.

Darauf wird im Schritt S19 eine Nachricht an die ausgewählte dynamische Applikation 12 gesendet, mit der die Applikation aufgefordert wird ihre Verbindungskapazität anzupassen.

Im darauffolgenden Schritt S20 wird die neu belegte Verbindungskapazität durch Addition der im Schritt S18 ermittelten neuen Verbindungskapazität der ausgewählten dynamischen Applikation 12 mit den Verbindungskapazitäten, die den anderen Applikationen 12 zugeordneten sind, berechnet.

Dann wird in im Schritt S21 durch Vergleichen überprüft, ob die gesamte Verbindungskapazität ausreichend für die neu belegte Verbindungskapazität ist.

Wenn dieses nicht der Fall ist, dann wird der Schritt S22 ausgeführt, in dem überprüft wird, ob weitere dynamische Applikationen 12 vorhanden sind.

Sind weitere solche Applikationen vorhanden, so wird eine andere dynamische Applikation 12 nach Klasse bzw. Priorität mit aufsteigender Priorität ausgewählt und der Verfahrensablauf wird mit Schritt S18 fortgeführt. Die Auswahl kann statt nach Klasse auch nach anderen Parametern bestimmt sein, wie z.B. der Reihenfolge der dynamischen Applikationen 12 im Applikationsprofilregister oder deren maximal mögliche Änderung bezüglich deren Datenrate.

Ergibt die Ausführung des Schritts S21, dass die gesamte Verbindungskapazität ausreichend für die neu berechnete Verbindungskapazität ist, dann wird der Verfahrensabschnitt B2 verlassen und der Schritt S15 (Fig. 4) ausgeführt.

Falls im Schritt S22 festgestellt wird, dass keine weiteren dynamischen Applikationen 12 für eine Auswahl vorhanden sind, dann wird der Schritt S23 ausgeführt, in dem überprüft wird, ob statische Applikationen 12 vorhanden sind und die gesamte Verbindungskapazität nicht ausreichend ist. Für das Überprüfen auf das Vorhandsein statischer Applikationen 12 werden die Einträge in MIN und in MAX ausgelesen und deren Werte miteinander verglichen. Sind deren Werte gleich, so liegt mindestens eine statische Applikation 12 vor. Wenn statische Applikationen 12 vorhanden sind, dann wählt das Kommunikationsorganisationsmodul 13 eine solche Applikation 12 aus. Diese Auswahl erfolgt vorzugweise gemäß der Klasse bzw. Priorität der statischen Applikation 12 mit aufsteigender Priorität, kann aber auch nach anderen Parametern bestimmt sein, wie z.B. der Reihenfolge der statischen Applikationen 12 im Applikationsprofilregister oder deren Datenrate.

Wird im Schritt S17 festgestellt, dass keine dynamischen Applikationen 12 vorhanden sind, dann folgt die Ausführung des Schritts S23.

Ergibt die Ausführung des Schritts S23, dass statische Applikationen 12 vorhanden sind und die gesamte Verbindungskapazität nicht ausreichend ist, und demzufolge eine Applikation 12 ausgewählt wird, dann wird im Schritt S24 der ausgewählten statischen Applikation 12 eine Terminierungsnachricht gesendet.

Im darauffolgenden Schritt S25 wird die neu belegte Verbindungskapazität durch Subtraktion der Verbindungskapazität der im Schritt S24 terminierten statischen Applikation 12 von der belegten Verbindungskapazität berechnet. Alternativ können die Verbindungskapazitäten summiert werden, die den anderen Applikationen 12, d.h. allen aktiven Applikationen 12 ohne die zu terminierende Applikation 12, zugeordneten sind.

Dann wird in im Schritt S26 durch Vergleichen überprüft, ob die gesamte Verbindungskapazität ausreichend für die neu belegte Verbindungskapazität ist.

Wenn dieses nicht der Fall ist, dann wird der Schritt S27 ausgeführt, in dem überprüft wird, ob weitere statische Applikationen 12 vorhanden sind.

Sind weitere solche Applikationen vorhanden, so wird eine andere statische Applikation 12 nach Klasse bzw. Priorität mit aufsteigender Priorität ausgewählt und der Verfahrensablauf wird mit Schritt S24 fortgeführt. Die Auswahl kann statt nach Klasse auch nach anderen Parametern bestimmt sein, wie z.B. der Reihenfolge der statischen Applikationen 12 im Applikationsprofilregister oder deren Datenrate.

Wird im Schritt S26 festgestellt, dass die gesamte Verbindungskapazität ausreichend für die neu berechnete Verbindungskapazität ist, dann wird der Verfahrensabschnitt B2 verlassen und der Schritt S15 (Fig. 4) ausgeführt.

Falls die Ausführung des Schritts S27 ergeben hat, dass keine weiteren statischen Applikationen 12 vorhanden sind, dann wird der Verfahrensabschnitt B2 verlassen und der Verfahrensablauf wird mit der Ausführung des Schritts S15 (Fig. 4) fortgesetzt.

Ergibt die Ausführung des Schritts S23, dass keine statischen Applikationen 12 vorhanden sind oder sich die gesamte Verbindungskapazität nicht reduziert hat oder diese ausreichend ist, dann wird der Verfahrensabschnitt B2 verlassen und der Schritt S15 (Fig. 4) ausgeführt.

Ist im Schritt S11 festgestellt worden, dass sich die Verbindungskapazität um zumindest den Schwellenwert $\Delta$ geändert hat, kann im gleichen Schritt S15 eine Neuberechnung des Schwellenwerts $\Delta$ stattfinden, wobei die neu ermittelte Verteilung der Verbindungskapazität bzw. die im Schritt S18 ermittelten Anpassungsparameter berücksichtigt werden können. Bei den dynamischen Applikationen 12, die ihre Datenrate zu ändern haben, aber nicht terminieren sollen, wird im Applikationsprofilregister die gewährte Datenrate eingetragen. Sollte eine Applikation 12 terminiert werden, so werden die entsprechenden Einträge der Applikation 12 im Applikationsprofilregister gelöscht.

Dann werden ggf. die Einträge im Verbindungsregister gemäß einer neuen Zuordnung der Verbindungskapazitäten aktualisiert.

Alternativ können in einem erweiterten Verfahren, wenn die Verbindungskapazität nicht ausreichend ist und keine statischen Applikationen 12 vorhanden sind, entweder weil keine vorhanden waren oder nach deren Terminierung, die ggf. vorhandenen dynamischen Applikationen 12 vor dem Verlassen des Verfahrensabschnitts B2 und der Ausführung des Schritts S15 (Fig. 4) terminiert werden. Dafür wird aus den dynamischen Applikationen 12 nach Klasse bzw. Priorität mit aufsteigender Priorität eine ausgewählt, ihr eine Terminierungsnachricht gesendet und dann erneut die belegte Verbindungskapazität ermittelt. Falls diese nicht ausreichend sein sollte, so wird die nächste dynamische Applikation 12 ausgewählt, der eine Terminierungsnachricht gesendet wird usw. Reicht die Verbindungskapazität jedoch aus, so wird der Verfahrensabschnitt B2 verlassen und der Schritt S15 (Fig. 4) ausgeführt. Die Auswahl der dynamischen Applikation 12 kann statt nach Klasse auch nach anderen Parametern bestimmt sein, wie z.B. der Reihenfolge solcher Applikationen 12 im Applikationsprofilregister oder deren Datenrate.

Die Erfindung kann folgendermaßen kurz zusammengefasst werden:

Die Erfindung betrifft eine zentrale Kommunikationseinheit eines Kraftfahrzeuges und ein Verfahren zum Steuern der Kommunikation zwischen mehreren Applikationen mittels einer solchen zentralen Kommunikationseinheit. Die zentrale Kommunikationseinheit weist ein Kommunikationsorganisationsmodul auf, das die zur Verfügung stehende externe Funk-Verbindungskapazitäten zwischen der zentralen Kommunikationseinheit und zumindest einer Sende-/Empfangseinrichtung aktiv nach vorbestimmten Kriterien auf einzelne aktive Datenverbindungen der Applikationen verteilen kann.

In der zentralen Kommunikationseinheit werden somit die vorhandenen externen Funk-Verbindungskapazitäten zwischen den einzelnen Datenverbindungen der einzelnen Applikationen gezielt gesteuert verteilt. Die Kriterien sind hierfür vor allem der Bedarf an Verbindungskapazität und/oder die Prioritäten der unterschiedlichen Datenverbindungen.

Bezugszeichenliste

| | |
|---|---|
| 1 | Kraftfahrzeug |
| 2 | zentrale Kommunikationseinheit |
| 3 | Verbindungsmodul |
| 4 | Antenne |
| 5 | externer Kommunikationspartner |
| 6 | Datennetzwerk (Internet) |
| 7 | Sende-/Empfangseinrichtung |
| 8 | Verbindungsmodulmanager |
| 9 | Gerät |
| 10 | Datennetzwerk |
| 11 | Switch |
| 12 | Applikation |
| 13 | Kommunikationsorganisationsmodul |

**Patentansprüche**

1. Zentrale Kommunikationseinheit eines Kraftfahrzeuges (1), mit mehreren Verbindungsmodulen (3) zur Herstellung einer drahtlosen Datenverbindung zwischen dem Kraftfahrzeug (1) und zumindest einer außerhalb des Kraftfahrzeuges befindlichen Sende-/Empfangseinrichtung (7), einem Verbindungsmodulmanager (8) zur Steuerung der Verbindungsmodule (3), um eine geeignete Datenverbindung zwischen dem Kraftfahrzeug (1) und der zumindest einen Sende-/Empfangseinrichtung (7) bereitzustellen,
einem Datennetzwerk (10), um mehrere Geräte (9) innerhalb des Kraftfahrzeuges (1) zu verbinden, wobei mehrere auf den Geräten (9) ausführbare Applikationen (12) jeweils eine Datenverbindung über die zentrale Kommunikationseinheit (2) zur Sende-/Empfangseinrichtung (7) beanspruchen können,
**gekennzeichnet durch**
ein Kommunikationsorganisationsmodul (13), das derart ausgebildet ist, dass zur Verfügung stehende externe Verbindungskapazitäten zwischen der zentralen Kommunikationseinheit (2) und der zumindest einen Sende-/Empfangseinrichtung (7) aktiv nach vorbestimmten Kriterien auf die einzelnen aktiven Datenverbindungen der Applikationen (12) verteilt werden.

2. Zentrale Kommunikationseinheit nach Anspruch 1,
**dadurch gekennzeichnet,**

**dass** das Kommunikationsorganisationsmodul (13) derart ausgebildet ist, dass die Verteilung der externen Verbindungskapazitäten nach einem oder mehreren der folgenden Kriterien erfolgt:

- Bedarf an Verbindungskapazität der unterschiedlichen Datenverbindungen;
- Effiziente Verteilung der zur Verfügung stehenden Datenverbindungen an die Applikationen (12);
- Anforderung der Applikation (12) an eine Datenverbindung, insbesondere zu einer Priorität der Applikation für die Datenverbindung, einer Bandbreite, einer Latenz und/oder einer Fehlerrate.

3. Zentrale Kommunikationseinheit nach Anspruch 1 oder 2,
   **dadurch gekennzeichnet,**
   **dass** das Kommunikationsorganisationsmodul (13) ein Verbindungsregister aufweist, in dem die einzelnen Datenverbindungen registriert sind, insbesondere mit einem oder mehreren der folgenden Parameter:
   Identifikationsbezeichner der Datenverbindung, Zuordnung eines Funkkanals zu der jeweiligen Datenverbindung, der Datenverbindung zugeordnete Bandbreite bzw. Datenrate des Funkkanals, aktuelle Bandbreite bzw. Datenrate des Funkkanals, aktuelle Fehlerrate des Funkkanals, aktuelle Latenz des Funkkanals, Datenübertragungskosten des Funkkanals.

4. Zentrale Kommunikationseinheit nach einem der Ansprüche 1 bis 3,
   **dadurch gekennzeichnet,**
   **dass** das Kommunikationsorganisationsmodul (13) ein Applikationsprofilregister aufweist, in dem Anforderungen der Anwendungen bzw. Applikationen (12) registriert sind, insbesondere mit einem oder mehreren der folgenden Parameter:
   Identifikationsbezeichner der Applikation, Zuordnung einer Datenverbindung zu der jeweiligen Applikation, der Applikation gewährte Bandbreite bzw. Datenrate, Applikationsklasse, Priorität für eine Datenverbindung über einen bestimmten Funkkanal, Minimale Datenrate der Applikation, Maximale Datenrate der Applikation, Anforderungen an die Fehlerrate der Datenverbindung, Anforderungen an die Latenz der Datenverbindung.

5. Zentrale Kommunikationseinheit nach einem der Ansprüche 1 bis 4,
   **dadurch gekennzeichnet,**
   **dass** die Verbindungsmodule (3) zur Herstellung von Funkkanälen nach unterschiedlichen Standards, insbesondere WLAN, GSM, GPRS, EDGE, 3G/UMTS, HSPA, 4G/LTE, ETSI ITS-G5, ausgebildet sind, wobei der Verbindungsmodulmanager (8) die Funkkanäle nach vorbestimmten Kriterien steuert, welche insbesondere Verfügbarkeit, Bandbreite, Kosten, Latenz, Fehlerrate sind.

6. Verfahren zum Steuern der Kommunikation zwischen mehreren Applikationen (12), welche auf mit einem Datennetzwerk (10) verbundenen Geräten (9) eines Kraftfahrzeuges (1) ausgeführt werden, mit zumindest einer außerhalb des Kraftfahrzeuges (1) befindlichen Sende-/Empfangseinrichtung (7), mittels einer zentralen Kommunikationseinheit (2), wobei
   die mehreren Applikationen (12) jeweils über eine Datenverbindung über die zentrale Kommunikationseinheit (2) mit der Sende-/Empfangseinrichtung (7) kommunizieren können, und **dadurch gekennzeichnet, dass** zur Verfügung stehende externe Verbindungskapazitäten zwischen der zentralen Kommunikationseinheit (2) und der zumindest einen Sende-/Empfangseinrichtung (7) mittels einem Kommunikationsorganisationsmodul (13) aktiv nach vorbestimmten Kriterien auf die einzelnen aktiven Datenverbindungen der Applikationen (12) verteilt werden.

7. Verfahren nach Anspruch 6,
   **dadurch gekennzeichnet,**
   **dass** die zentrale Kommunikationseinheit (2) mit der zumindest einen Sende-/Empfangseinrichtung (7) über einen Funkkanal kommuniziert, wobei mehrere Funkkanäle nach unterschiedlichen Standards, insbesondere WLAN, GSM, GPRS, EDGE, 3G/UMTS, HSPA, 4G/LTE, ETSI ITS-G5, gleichzeitig oder aufeinanderfolgend hergestellt werden können, und die Funkkanäle vorzugsweise nach vorbestimmten Kriterien gesteuert werden, welche insbesondere Verfügbarkeit, Bandbreite, Kosten, Latenz, Fehlerrate sind.

8. Verfahren nach Anspruch 7,
   **dadurch gekennzeichnet,**
   **dass** der Funkkanal unterschiedlichen Datenverbindungen zugeordnet ist.

9. Verfahren nach einem der Ansprüche 6 bis 8,
   **dadurch gekennzeichnet,**

**EP 3 092 829 B1**

**dass** das Kommunikationsorganisationsmodul (13) die zur Verfügung stehenden externen Verbindungskapazitäten überwacht und ändern sich diese, dann werden sie neu zwischen den bestehenden Datenverbindungen verteilt.

10. Verfahren nach einem der Ansprüche 6 bis 9,
    **dadurch gekennzeichnet,**
    **dass** die zentrale Kommunikationseinheit (2) mit den mehreren Geräten (9) des Kraftfahrzeuges (1) über ein kabelgebundenes Netzwerk (10) kommuniziert.

11. Verfahren nach einem der Ansprüche 6 bis 10,
    **dadurch gekennzeichnet,**
    **dass** das Kommunikationsorganisationsmodul (13) den Datenfluss der einzelnen Datenverbindungen überwacht.

12. Verfahren nach einem der Ansprüche 6 bis 11,
    **dadurch gekennzeichnet,**
    **dass** eine Applikation zum Aufbauen einer Datenverbindung eine Verbindungsanfrage an das Kommunikationsorganisationsmodul (13) stellt, mit welcher vorbestimmte Parameter der gewünschten Datenverbindung übermittelt werden.

13. Verfahren nach einem der Ansprüche 6 bis 12,
    **dadurch gekennzeichnet,**
    **dass** eine zentrale Kommunikationseinheit (2) nach einem der Ansprüche 1 bis 5 verwendet wird.

14. Kraftfahrzeug umfassend
    eine zentrale Kommunikationseinheit (2) nach einem der Ansprüche 1 bis 5, Geräte (9), auf weichen mehrere Applikationen (12) ausführbar sind, die jeweils eine Datenverbindung über die zentrale Kommunikationseinheit (2) zu zumindest einer externen Sende-/Empfangseinrichtung (7) beanspruchen können, wobei die Geräte (9) und die zentrale Kommunikationseinheit (2) mit einem Datennetzwerk (10) verbunden sind.

15. Kraftfahrzeug nach Anspruch 13,
    **dadurch gekennzeichnet,**
    **dass** die zentrale Kommunikationseinheit (2) zum Ausführen eines Verfahrens nach einem der Ansprüche 6 bis 12 ausgebildet ist.

**Claims**

1. Central communication unit of a motor vehicle (1) comprising a number of connection modules (3) for establishing a wireless data link between the motor vehicle (1) and at least one transmitting/receiving device (7) located outside the motor vehicle, a connection module manager (8) for controlling the connection modules (3) in order to provide a suitable data link between the motor vehicle (1) and the at least one transmitting/receiving device (7), a data network (10) for connecting a number of devices (9) within the motor vehicle (1), wherein a number of applications (12), which can be executed on the devices (9), can in each case utilize a data link via the central communication unit (2) to the transmitting/receiving device (7),
   **characterized by**
   a communication organization module (13) which is designed in such a manner that available external connection capacities between the central communication unit (2) and the at least one transmitting/receiving device (7) are distributed actively in accordance with predetermined criteria to the individual active data links of the applications (12).

2. Central communication unit according to Claim 1,
   **characterized in that**
   the communication organization module (13) is designed in such a manner that the distribution of the external connection capacities takes place in accordance with one or more of the following criteria:

   - requirement for connection capacity of the different data links;
   - efficient distribution of the available data links to the applications (12);
   - request of the application (12) for a data link, particularly with respect to a priority of the application for the data link, a bandwidth, a latency and/or an error rate.

**16**

**3.** Central communication unit according to Claim 1 or 2,
**characterized in that**
the communication organization module (13) has a connection register in which the individual data links are registered, particularly with one or more of the following parameters:
identification designator of the data link, allocation of a radio channel to the respective data link, bandwidth allocated to the data link or data rate of the radio channel, respectively, current bandwidth or data rate of the radio channel, current error rate of the radio channel, current latency of the radio channel, data transmission costs of the radio channel.

**4.** Central communication unit according to one of Claims 1 to 3,
**characterized in that**
the communication organization module (13) has an application profile register in which requirements of the applications (12) are registered, particularly with one or more of the following parameters:
identification designator of the application, allocation of a data link to the respective application, bandwidth or data rate granted to the application, application class, priority for a data link via a particular radio channel, minimum data rate of the application, maximum data rate of the application, requirements for the error rate of the data link, requirements for the latency of the data link.

**5.** Central communication unit according to one of Claims 1 to 4,
**characterized in that**
the connection modules (3) are designed for establishing radio channels according to different standards, particularly WLAN, GSM, GPRS, EDGE, 3G/UMTS, HSPA, 4G/LTE, ETSI ITS-G5, wherein the connection module manager (8) controls the radio channels in accordance with predetermined criteria, which are, in particular, availability, bandwidth, costs, latency, error rate.

**6.** Method for controlling the communication between a number of applications (12) which are executed on devices (9), connected to a data network (10), of a motor vehicle (1), comprising at least one transmitting/receiving device (7) located outside the motor vehicle (1), by means of a central communication unit (2), wherein
the number of applications (12) can communicate with the transmitting/receiving device (7) in each case via a data link via the central communication unit (2), and **characterized in that**
available external connection capacities between the central communication unit (2) and the at least one transmitting/receiving device (7) are distributed actively in accordance with predetermined criteria to the individual active data links of the applications (12) by means of a communication organization module (13).

**7.** Method according to Claim 6,
**characterized in that**
the central communication unit (2) communicates with the at least one transmitting/receiving device (7) via a radio channel, wherein a number of radio channels can be established in accordance with different standards, particularly WLAN, GSM, GPRS, EDGE, 3G/UMTS, HSPA, 4G/LTE, ETSI ITS-G5, simultaneously or successively and the radio channels are controlled preferably in accordance with predetermined criteria which are, in particular, availability, bandwidth, costs, latency, error rate.

**8.** Method according to Claim 7,
**characterized in that**
the radio channel is allocated to different data links.

**9.** Method according to one of Claims 6 to 8,
**characterized in that**
the communication organization module (13) monitors the available external connection capacities, and, if they change, they are newly distributed between the existing data links.

**10.** Method according to one of Claims 6 to 9,
**characterized in that**
the central communication unit (2) communicates with the number of devices (9) of the motor vehicle (1) via a cable-connected network (10).

**11.** Method according to one of Claims 6 to 10,
**characterized in that**

the communication organization module (13) monitors the data flow of the individual data links.

**12.** Method according to one of Claims 6 to 11,
**characterized in that**
an application for setting up a data link sends a connection request to the communication organization module (13) with which predetermined parameters of the desired data link are transmitted.

**13.** Method according to one of Claims 6 to 12,
**characterized in that**
a central communication unit (2) according to one of Claims 1 to 5 is used.

**14.** Motor vehicle comprising
a central communication unit (2) according to one of Claims 1 to 5, devices (9) on which a number of applications (12) can be executed which can in each case utilize a data link via the central communication unit (2) to at least one external transmitting/receiving device (7), wherein the devices (9) and the central communication unit (2) are connected to a data network (10).

**15.** Motor vehicle according to Claim 13,
**characterized in that**
the central communication unit (2) is designed for carrying out a method according to one of Claims 6 to 12.

**Revendications**

**1.** Unité de communication centrale d'un véhicule automobile (1), ladite unité comprenant une pluralité de modules de connexion (3) destinés à établir une connexion de données sans fil entre le véhicule automobile (1) et au moins un émetteur-récepteur (7) situé à l'extérieur du véhicule automobile, un gestionnaire de modules de connexion (8) destiné à commander les modules de connexion (3) afin d'établir une connexion de données appropriée entre le véhicule automobile (1) et l'au moins un émetteur-récepteur (7), un réseau de données (10) destiné à relier une pluralité de dispositifs (9) à l'intérieur du véhicule automobile (1), une pluralité d'applications (12) qui peuvent être exécutées sur les dispositifs (9) pouvant chacune revendiquer par le biais de l'unité de communication centrale (2) une connexion de données avec l'émetteur-récepteur {7),
**caractérisée par**
un module d'organisation de communication (13) qui est conçu de telle sorte que les capacités de connexion externe disponibles entre l'unité de communication centrale (2) et l'au moins un émetteur/récepteur (7) sont réparties activement entre les connexions de données actives individuelles des applications (12) selon des critères prédéterminés.

**2.** Unité de communication centrale selon la revendication 1,
**caractérisée en ce que**
le module d'organisation de communication (13) est conçu de telle sorte que la répartition des capacités de connexion externe soit effectuée selon un ou plusieurs des critères suivants :

- demande de capacité de connexion des différentes connexions de données ;
- répartition efficace des connexions de données disponibles entre les applications (12) ;
- demande de l'application (12) sur une connexion de données, notamment sur une priorité de l'application pour la connexion de données, une bande passante, une latence et/ou un taux d'erreur.

**3.** Unité de communication centrale selon la revendication 1 ou 2,
**caractérisée en ce que**
le module d'organisation de communication (13) comporte un registre de connexions dans lequel les connexions de données individuelles sont enregistrées, en particulier avec un ou plusieurs des paramètres suivants : identificateur de la connexion de données, association d'un canal radio à la connexion de données respective, bande passante ou débit de données du canal radio associé(e) à la connexion de données respective, bande passante actuelle ou débit de données du canal radio, taux d'erreur actuel du canal radio, latence actuelle du canal radio, coûts de transmission de données du canal radio.

**4.** Unité de communication centrale selon l'une des revendications 1 à 3,
**caractérisée en ce que**

le module d'organisation de communication (13) comporte un registre de profils d'application dans lequel des exigences d'utilisations ou d'applications (12) sont enregistrées, notamment avec un ou plusieurs des paramètres suivants :

identificateur de l'application, association d'une connexion de données à l'application respective, bande passante ou débit de données accordé(e) à l'application, classe d'application, priorité pour une connexion de données par le biais d'un canal radio déterminé, débit de données minimum de l'application, débit de données maximum de l'application, exigences en termes de taux d'erreur de la connexion de données, exigences en termes de latence de connexion de données.

5. Unité de communication centrale selon l'une des revendications 1 à 4,
**caractérisée en ce que**
les modules de connexion (3) sont conçus pour produire des canaux radio selon des normes différentes, notamment WLAN, GSM, GPRS, EDGE, 3G/UMTS, HSPA, 4G/LTE, ETSI ITS-G5, le gestionnaire de module de connexion (8) commandant les canaux radio selon des critères prédéterminés, en particulier la disponibilité, la bande passante, les coûts, la latence, le taux d'erreur.

6. Procédé de commande de la communication entre une pluralité d'applications (12) qui sont exécutées sur des dispositifs (9) d'un véhicule automobile (1), connectés à un réseau de données (10), à l'aide d'au moins un émetteur-récepteur (7) situé à l'extérieur du véhicule automobile (1) au moyen d'une unité de communication centrale (2), la pluralité d'applications (12) pouvant chacune communiquer avec l'émetteur/récepteur (7) par le biais d'une connexion de données et par le biais de l'unité de communication centrale (2), et **caractérisé en ce que** les capacités de connexion externe disponibles entre l'unité de communication centrale (2) et l'au moins un émetteur/récepteur (7) sont réparties activement entre les connexions de données actives individuelles des applications (12) au moyen d'un module d'organisation de communication (13) selon des critères prédéterminés.

7. Procédé selon la revendication 6,
**caractérisé en ce que**
l'unité de communication centrale (2) communique avec l'au moins un émetteur/récepteur (7) par le biais d'un canal radio,
une pluralité de canaux radio selon différentes normes, en particulier WLAN, GSM, GPRS, EDGE, 3G/UMTS, HSPA, 4G/LTE, ETSI ITS-G5, pouvant être produits simultanément ou successivement, et les canaux radio étant de préférence commandés selon des critères prédéterminés, notamment la disponibilité, la bande passante, les coûts, la latence, le taux d'erreur.

8. Procédé selon la revendication 7,
**caractérisé en ce que**
le canal radio est associé à différentes connexions de données.

9. Procédé selon l'une des revendications 6 à 8,
**caractérisé en ce que**
le module d'organisation de communication (13) surveille les capacités de connexion externe disponibles et celles-ci sont modifiées, puis réparties entre les connexions de données existantes.

10. Procédé selon l'une des revendications 6 à 9,
**caractérisé en ce que**
l'unité de communication centrale (2) communique avec la pluralité de dispositifs (9) du véhicule automobile (1) par le biais d'un réseau filaire (10).

11. Procédé selon l'une des revendications 6 à 10,
**caractérisé en ce que**
le module d'organisation de communication (13) surveille le flux de données des connexions de données individuelles.

12. Procédé selon l'une des revendications 6 à 11,
**caractérisé en ce que**
pour établir une connexion de données une application envoie une demande de connexion au module d'organisation de communication (13) auquel des paramètres prédéterminés de la connexion de données souhaitée sont transmis.

**13.** Procédé selon l'une des revendications 6 à 12,
**caractérisé en ce**
**qu'**une unité de communication centrale (2) selon l'une des revendications 1 à 5 est utilisée.

**14.** Véhicule automobile comprenant
une unité de communication centrale (2) selon l'une des revendications 1 à 5,
des dispositifs (9) sur lesquels une pluralité d'applications (12) peuvent être exécutées qui peuvent chacune revendiquer une connexion de données à au moins un émetteur-récepteur externe (7) par le biais de l'unité de communication centrale (2), les dispositifs (9) et l'unité centrale de communication (2) étant connectés à un réseau de données (10).

**15.** Véhicule automobile selon la revendication 13,
**caractérisée en ce que**
l'unité de communication centrale (2) est conçue pour mettre en œuvre un procédé selon l'une des revendications 6 à 12.

FIG. 1

FIG. 2

FIG. 3A

| DV | FK | ZD | BB | FR | LT | DK |
|---|---|---|---|---|---|---|
| **A** | **2** | 6000 | **7000** | **2** | **2** | 0,0001 |
| **B** | **1** | 1000 | **12000** | **3** | **1** | 0,00001 |
| **C** | **1** | 11000 | **12000** | **3** | **1** | 0,00001 |
| C | 2 | 1000 | 7000 | 2 | 2 | 0,0001 |
| C | 3 | 1000 | 6000 | 1 | 3 | 0,0001 |

FIG. 3B

| APP | ZDV | GD | KL | PR | MIN | MAX | MFR | MLT |
|---|---|---|---|---|---|---|---|---|
| X | A | 6000 | 4 | - | 3000 | 6000 | 2 | 2 |
| Y | B | 1000 | 2 | - | 1000 | 1000 | 3 | 2 |
| Z | C | 13000 | 3 | - | 5000 | 13000 | 5 | 5 |

FIG. 3C

EP 3 092 829 B1

FIG. 4

FIG. 5

**IN DER BESCHREIBUNG AUFGEFÜHRTE DOKUMENTE**

**In der Beschreibung aufgeführte Patentdokumente**

- WO 2010130737 A1
- EP 2133849 A1